# EUROPÄISCHE PATENTSCHRIFT

(11) **EP 1 732 959 B1**
(45) Veröffentlichungstag und Bekanntmachung des Hinweises auf die Patenterteilung: **12.11.2008**
(21) Anmeldenummer: 05715192.0
(22) Anmeldetag: 19.01.2005
(51) Int. Cl.: C08F 220/38

(54) **MISCHUNGEN ZUR HERSTELLUNG TRANSPARENTER KUNSTSTOFFE, TRANSPARENTE KUNSTSTOFFE SOWIE VERFAHREN ZU DEREN HERSTELLUNG UND VERWENDUNG**
MIXTURES FOR PRODUCING TRANSPARENT PLASTICS, TRANSPARENT PLASTICS AND METHOD FOR THEIR PRODUCTION AND USE
MELANGES POUR PRODUIRE DES PLASTIQUES TRANSPARENTS, PLASTIQUES TRANSPARENTS, ET PROCEDE DE PRODUCTION ET UTILISATION DE CES PLASTIQUES TRANSPARENTS

(30) Priorität: 07.04.2004 DE 102004017574
(43) Veröffentlichungstag der Anmeldung: 20.12.2006
(73) Patentinhaber: Evonik Röhm GmbH, 64293 Darmstadt (DE)
(72) Erfinder: SCHMITT, Bardo, 55252 Mainz (DE); HARTMANN, Patrik, 64572 Büttelborn (DE)
(86) Internationale Anmeldenummer: PCT/EP2005/000464
(87) Internationale Veröffentlichungsnummer: WO 2005/097852

(56) Entgegenhaltungen:
- EP-A- 0 592 935
- WO-A-03/011925
- WO-A-03/011926
- US-B1- 6 342 571

## Beschreibung

Die vorliegende Erfindung betrifft Mischungen zur Herstellung transparenter Kunststoffe. Des weiteren bezieht sich die vorliegende Erfindung auf transparente Kunststoffe, die aus den Mischungen hergestellt werden können, sowie Verfahren zu deren Herstellung. Weiterhin betrifft die vorliegende Erfindung die Verwendung von transparenten Kunststoffen zur Herstellung von optischen, vor allem ophthalmischen Linsen.

Brillen sind heutzutage aus dem Alltag nicht mehr wegzudenken. Dabei haben insbesondere Brillen mit Kunststoffgläsern in letzter Zeit an Bedeutung gewonnen, weil sie leichter und weniger zerbrechlich als Brillengläser aus anorganischen Materialien sind und mittels geeigneter Farbstoffe gefärbt werden können. Zur Herstellung von Kunststoff-Brillengläsern werden im allgemeinen hochtransparente Kunststoffe eingesetzt, die beispielsweise ausgehend von Diethylenglykol-bis(allylcarbonat) (DAC), Thiourethan-Verbindungen mit α,ω-terminierten Mehrfachbindungen oder schwefelhaltigen (Meth)acrylaten erhältlich sind.

DAC-Kunststoff weist eine sehr gute Schlagzähigkeit, Transparenz und eine gute Verarbeitbarkeit auf. Nachteilig ist jedoch, dass aufgrund des relativ geringen Brechungsindex n_{D} von ca. 1,50 sowohl das Zentrum als auch die Ränder der betreffenden Kunststoffgläser verstärkt werden müssen, so dass die Brillengläser dementsprechend dick und schwer sind. Der Tragekomfort von Brillen mit DAC-Kunststoffgläsern ist daher deutlich gemindert.

Die Druckschrift DE 4234251 offenbart schwefelhaltige Polymethacrylate, welche durch radikalische Copolymerisation einer Monomermischung aus Verbindungen der Formel (1) und (2) erhalten werden.

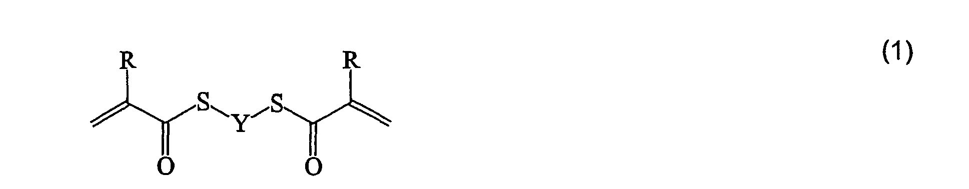

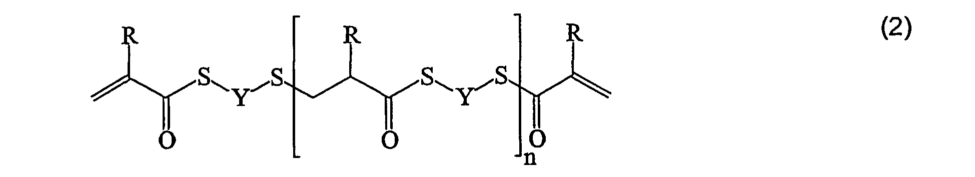

Dabei bezeichnet Y für einen gegebenenfalls verzweigten, gegebenenfalls cyclischen Alkylrest mit 2 bis 12 Kohlenstoffatomen oder einem Arylrest mit 6 bis 14 Kohlenstoffatomen oder einen Alkarylrest mit 7 bis 20 Kohlenstoffatomen, wobei die Kohlenstoffketten durch eine oder mehrere Ether- oder Thioethergruppen unterbrochen sein können. R steht für Wasserstoff oder Methyl und n ist eine ganze Zahl im Bereich von 1 bis 6.

Gemäß DE 4234251 stehen die Monomere der Formel (1) und (2) im Allgemeinen im molaren Verhältnis von 1:0,5 bis 0,5:1. Die Herstellung der Monomermischung erfolgt durch Umsetzung von mindestens zwei Molen (Meth)acrylsäurechlorid oder (Meth)acrylsäureanhydrid mit einem Mol eines Dithiols, wobei man das (Meth)acrylsäurechlorid oder (Meth)acrylsäureanhydrid in einem inerten, organischen Lösungsmittel und das Dithiol in wässrig-alkalischer Lösung zur Reaktion bringt. Als geeignete Lösungsmittel werden Methyl-tert.butylether, Toluol und Xylol genannt, deren Dielektrizitätskonstante bei 20°C 2,6, 2,4 bzw. 2,3 bis 2,6 ist.

Die in DE 4234251 beschriebenen Kunststoffe sind farblos, hart und leicht spröde und weisen einen hohen Brechungsindex n_{D} im Bereich von 1,602 bis 1,608 auf. Die Abbesche-Zahl liegt zwischen 35 und 38. Daher sind auch diese Kunststoffe für Brillengläser nur bedingt geeignet. Angaben zur Glasübergangstemperatur der Kunststoffe können auch dieser Druckschrift nicht entnommen werden.

In der Druckschrift WO 03/011925 wird die Polymerisation von Thiomethacrylaten mit Polyethylenglykolderivaten beschrieben. Die daraus hergestellten Kunststoffe können u. a. für die Herstellung optischer Linsen eingesetzt werden. Nachteilig an diesen Linsen sind deren mechanischen Eigenschaften. So genügt insbesondere die Schlagzähigkeit vielen Anforderungen nicht.

In Anbetracht des Standes der Technik war es nun Aufgabe der vorliegenden Erfindung, Mischungen für die Herstellung von transparenten Kunststoffen, die als Material für optische Linsen geeignet sind, zur Verfügung zu stellen, wobei die Kunststoffe möglichst gute mechanischen Eigenschaften, insbesondere eine hohe Schlagzähigkeit aufweisen und gleichzeitig einen hohen Brechungsindex, vorzugsweise größer 1,59, und eine möglichst hohe Abbeschen-Zahl, vorzugsweise größer 36 zeigen. Insbesondere sollten Kunststoff-Brillengläser herstellbar sein, die eine niedrige Dispersion und keine Farbränder aufweisen.

Der vorliegenden Erfindung lag auch die Aufgabe zugrunde, eine Eduktzusammensetzung für die Herstellung eines hochtransparenten Kunststoffes mit verbesserten mechanischen Eigenschaften auch bei Temperaturen oberhalb der Raumtemperatur zugänglich zu machen. Insbesondere sollte der erfindungsgemäße Kunststoff eine möglichst hohe Glasübergangstemperatur, vorzugsweise größer 80,0°C, aufweisen.

Eine Aufgabe der vorliegenden Erfindung war mithin einen hochtransparenten Kunststoff anzugeben, der ausgehend von der Eduktzusammensetzung auf einfache Art und Weise, im industriellen Maßstab und kostengünstig herstellbar ist. Insbesondere sollte er ausgehend von einer bei Normaldruck und Temperaturen im Bereich von 20,0°C bis 80,0°C fließfähigen Mischung via freie radikalische Polymerisation erhältlich sein.

Der vorliegenden Erfindung lag auch die Aufgabe zugrunde, Anwendungsgebiete und Verwendungsmöglichkeiten des erfindungsgemäßen hochtransparenten Kunststoffes anzugeben.

Gelöst werden diese sowie weitere nicht explizit genannte Aufgaben, die jedoch aus den hierin einleitend diskutierten Zusammenhängen ohne weiteres ableitbar oder erschließbar sind, durch eine Mischung mit allen Merkmalen des Patentanspruchs 1. Zweckmäßige Abwandlungen der erfindungsgemäßen Mischung werden in den auf Anspruch 1 rückbezogenen Unteransprüchen unter Schutz gestellt. Daneben werden die aus den erfindungsgemäßen Mischungen erhältlichen hochtransparenten Kunststoffe sowie Verfahren zu ihrer Herstellung beansprucht. Der Anspruch der Verwendungskategorie schützt eine bevorzugte Verwendung vom erfindungsgemäßen hochtransparenten Kunststoff. Eine optische, vorzugsweise ophthalmische Linse, die den erfindungsgemäßen hochtransparenten Kunststoff aufweist, wird in einem weiteren Produktanspruch beschrieben.

Mischungen, umfassend
a) ein Prepolymer hergestellt aus Verbindungen der Formel (I) und (II) 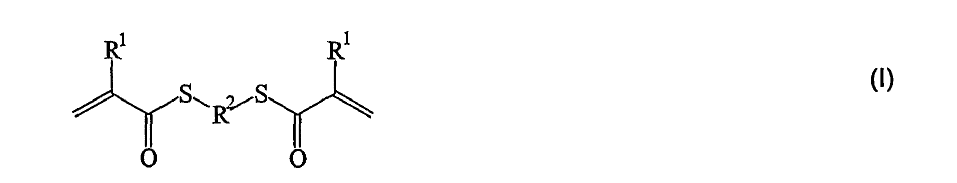 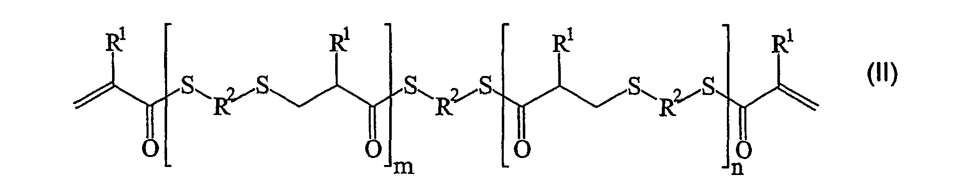 worin R¹ jeweils unabhängig voneinander Wasserstoff oder einen Methylrest,
   R² jeweils unabhängig voneinander einen linearen oder verzweigten, aliphatischen oder cycloaliphatischen Rest oder einen substituierten oder unsubstituierten aromatischen oder heteroaromatischen Rest und m und n jeweils unabhängig voneinander eine ganze Zahl größer gleich 0 mit m + n > 0 bedeuten, und Alkyldithiolen oder Polythiolen, vorzugsweise Verbindungen der Formel (III),

   HS-R³-SH (III)

   wobei R³ gleich oder verschieden von der in R² angegebenen Bedeutung sein kann
b) mindestens ein radikalisch polymerisierbares Monomer (A) mit mindestens 2 Methacrylatgruppen und
c) aromatischen Vinylverbindungen,
   die zur Herstellung von transparenten Kunststoffen geeignet sind und die hervorragende mechanische und optische Eigenschaften aufweisen. Die Mischungen können gegebenenfalls
d) ein radikalisch polymerisierbares Monomer mit mindestens zwei endständigen olefinischen Gruppen, die sich in ihrer Reaktivität unterscheiden, wie dies z.B. bei einem bifunktionellen Monomer mit Methacrylatendgruppe und einer Vinylengruppe der Fall ist und/oder
e) mindestens ein ethylenisch ungesättigtes Monomer (B), bevorzugt aus der Gruppe der Methacrylate, besonders bevorzugt 2-Hydroxyethylmethacrylat,
enthalten.

Der erfindungsgemäße transparente Kunststoff weist eine bisher unbekannte Kombination herausragender Eigenschaften, wie einen hohen Brechungsindex, eine hohe Abbesche Zahl, eine gute Schlagzähigkeit sowie eine hohe Glasübergangstemperatur auf. Die entsprechenden Kunststoff-Brillengläser zeigen eine niedrige Dispersion; Farbränder sind nicht zu beobachten.

Zugleich besitzt der erfindungsgemäße transparente Kunststoff weitere Vorteile. Hierzu gehören unter anderem:
⇒ Aufgrund des hohen Brechungsindex vom erfindungsgemäßen Kunststoff ist eine Verstärkung und somit Verdickung des Zentrums und der Ränder von entsprechenden Kunststoff-Brillengläsern nicht erforderlich, der Tragekomfort derartiger Brillen ist wegen des vergleichsweise geringen Gewichts deutlich erhöht.
⇒ Die sehr gute Schlagzähigkeit des erfindungsgemäßen Kunststoffes schützt die entsprechenden Kunststoff-Brillengläser vor den "Gefahren des Alltags". Eine Beschädigung bzw. irreparable Zerstörung, insbesondere der dünnen Brillengläser durch mechanische Gewalteinwirkung wird größtenteils verhindert.
⇒ Der erfindungsgemäße hochtransparente Kunststoff weist eine hohe Glasübergangstemperatur, vorzugsweise größer 80,0°C, auf und behält daher bis zu dieser Temperatur seine hervorragenden mechanischen Eigenschaften, insbesondere die hohe Schlagfestigkeit und seine Härte.
⇒ Der erfindungsgemäße hochtransparente Kunststoff ist durch freie radikalische Copolymerisation einer bei Normaldruck und Temperaturen im Bereich von 20,0°C bis 80,0°C vorzugsweise fließfähigen Monomermischung auf einfache Art und Weise, im industriellen Maßstab und kostengünstig herstellbar.
⇒ Die Herstellung der zugrunde liegenden Monomermischung ist ebenfalls auf einfache Art und Weise, im industriellen Maßstab und kostengünstig möglich.

Das Prepolymer der vorliegenden Erfindung umfasst Verbindungen der Formel (I) und/oder (II) und (III)

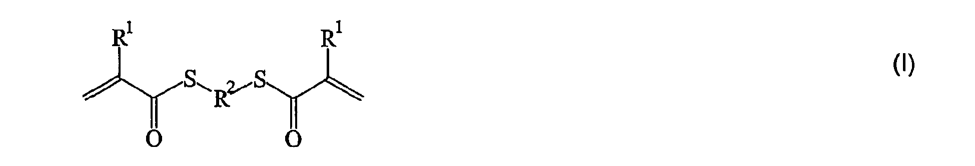

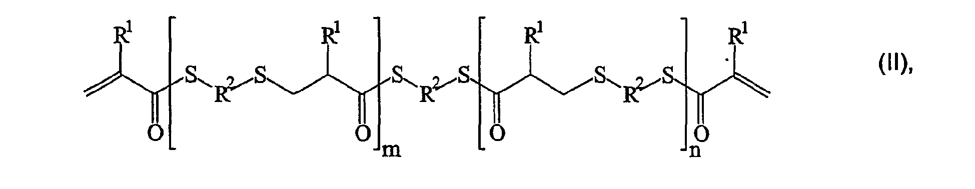

HS-R³-SH (III),

worin der Rest R¹ jeweils unabhängig voneinander Wasserstoff oder ein Methylrest, vorzugsweise ein Methylrest und
der Rest R² jeweils unabhängig voneinander einen linearen oder verzweigten, aliphatischen oder cycloaliphatischen Rest oder einen substituierten oder unsubstituierten aromatischen oder heteroaromatischen Rest bezeichnet, wobei der Rest R² vorzugsweise 1 bis 100, insbesondere 1 bis 20 Kohlenstoffatome umfassen kann und
worin der Rest R³ jeweils unabhängig von R² einen linearen oder verzweigten, aliphatischen oder cycloaliphatischen Rest oder einen substituierten oder unsubstituierten aromatischen oder heteroaromatischen Rest bezeichnet, wobei der Rest R³ vorzugsweise 1 bis 100, insbesondere 1 bis 20 Kohlenstoffatome umfassen kann.

Zu den bevorzugten linearen oder verzweigten, aliphatischen oder cycloaliphatischen Resten gehören beispielsweise die Methylen-, Ethylen-, Propylen-, iso-Propylen-, n-Butylen-, iso-Butylen-, tert-Butylen- oder Cyclohexylen-Gruppe.

Zu den bevorzugten zweibindigen aromatischen oder heteroaromatischen Resten gehören insbesondere Gruppen, die sich von Benzol, Naphthalin, Biphenyl, Diphenylether, Diphenylmethan, Diphenyldimethylmethan, Bisphenon, Diphenylsulfon, Chinolin, Pyridin, Anthracen und Phenanthren ableiten. Dabei umfassen im Rahmen der vorliegenden Erfindung cycloaliphatische Reste auch bi-, tri- und polycyclische aliphatische Reste.

Weiterhin umfasst der Rest R² oder R³ auch Reste der Formel 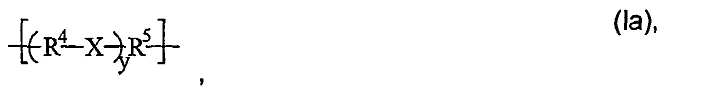 wobei R⁴ jeweils unabhängig voneinander ein linearer oder verzweigter, aliphatischer oder cycloaliphatischer Rest, wie beispielsweise eine Methylen-, Ethylen-, Propylen-, iso-Propylen-, n-Butylen-, iso-Butylen-, tert.-Butylen- oder Cyclohexylen-Gruppe ist. Der Rest X ist jeweils unabhängig voneinander Sauerstoff oder Schwefel und der Rest R⁵ steht für einen linearen oder verzweigten, aliphatischen oder cycloaliphatischen Rest, wie beispielsweise eine Methylen-, Ethylen-, Propylen-, iso-Propylen-, n-Butylen-, iso-Butylen-, tert.-Butylen- oder Cyclohexylen-Gruppe. Dabei umfassen im Rahmen der vorliegenden Erfindung cycloaliphatische Reste auch bi-, tri- und polycyclische aliphatische Reste. y ist eine ganze Zahl zwischen 1 und 10, insbesondere 1, 2, 3 und 4.

Bevorzugte Reste der Formel (Ia) umfassen: 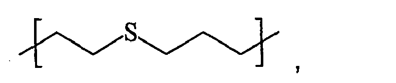 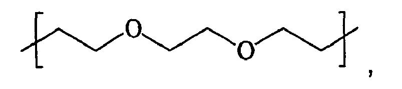 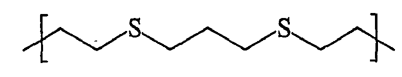 und

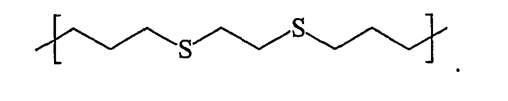

Vorzugsweise ist der Rest R² ein aliphatischer Rest mit 1 bis 10 Kohlenstoffatomen, vorzugsweise ein linearer aliphatischer Rest mit 2 bis 8 Kohlenstoffatomen.

Die Indizes m und n sind jeweils unabhängig voneinander eine ganze Zahl größer gleich 0, beispielsweise 0, 1, 2, 3, 4, 5 oder 6. Dabei ist die Summe m + n größer 0, vorzugsweise im Bereich von 1 bis 6, zweckmäßigerweise im Bereich von 1 bis 4, insbesondere 1, 2 oder 3.

Die Verbindungen der Formel (I) und (II) sowie die Verbindungen der Formel (III) können jeweils einzeln oder auch als Mischung mehrerer Verbindungen der Formel (I), (II) bzw. (III) zur Herstellung des Prepolymers eingesetzt werden.

Die relativen Anteile der Verbindungen der Formel (I), (II) und (III) in der erfindungsgemäßen Monomermischung sind prinzipiell beliebig, sie können dazu genutzt werden, das Eigenschaftsprofil des erfindungsgemäßen Kunststoffes gemäß den Bedürfnissen der Anwendung "maßzuschneidern". Beispielsweise kann es äußerst zweckmäßig sein, dass die Monomermischung einen deutlichen Überschuss an Verbindung(en) der Formel (I) oder Verbindung(en) der Formel (II) oder Verbindung(en) der Formel (III), jeweils bezogen auf die Gesamtmenge an Verbindungen der Formel (I), (II) und (III) im Prepolymer, enthält.

Für die Zwecke der vorliegenden Erfindung ist es jedoch besonders günstig, dass die Mischung mehr als 10 mol-%, vorzugsweise mehr als 12 mol-%, insbesondere mehr als 14 mol-%, bezogen auf die Gesamtmenge der Verbindungen der Formel (I) und (II), Verbindungen der Formel (II) mit m+n=2 enthält. Ist R² ein Ethylenrest, so beträgt der Gewichtsanteil von (II) mit m+n=2 in der Mischung mehr als 10%, insbesondere mehr als 15 %.

Weiterhin ist es erfindungsgemäß besonders günstig, Mischungen einzusetzen, die mehr als 5,8 mol-%, zweckmäßigerweise mehr als 6,5 mol-%, insbesondere mehr als 7,5 mol-%, bezogen auf die Gesamtmenge der Verbindungen der Formel (I) und (II), Verbindungen der Formel (II) mit m+n=3 enthalten. Das entspricht einem Gewichtsanteil von (II) mit m+n=3, wenn R² ein Ethylenrest ist, von mindestens 6%.

Der Anteil der Verbindungen (I) beträgt vorzugsweise 0,1 bis 50,0 mol-%, zweckmäßigerweise 10,0 bis 45,0 mol-%, insbesondere 20,0 bis 35,0 mol-%, bezogen auf die Gesamtmenge der Verbindungen der Formel (I) und (II), was einem bevorzugten Bereich des Gewichtsanteils der Verbindung (I), wenn R² ein Ethylenrest ist, von 15 bis 40 % entspricht. Der Anteil der Verbindungen (II) mit m+n=1 ist vorzugsweise 1 bis 40,0 mol-%, zweckmäßigerweise 5 bis 35,0 mol-%, insbesondere 10 bis 30 mol-%, bezogen auf die Gesamtmenge der Verbindungen der Formel (I) und (II). Das entspricht einem Gewichtsanteil der Verbindungen (II) mit m+n=1, wenn R² ein Ethylenrest ist, von vorzugsweise 10 bis 45 %. Der Anteil der Verbindungen (II) mit m+n>3 ist vorzugsweise größer 0 mol-%, zweckmäßigerweise größer 1 mol-%, insbesondere größer 2 mol-%, bezogen auf die Gesamtmenge der Verbindungen der Formel (I) und (II). Ist R² ein Ethylenrest, so beträgt der Gewichtsanteil für Verbindungen (II) mit m+n>3 in der Mischung mehr als 2%, insbesondere mehr als 5 %.

Der Anteil der Verbindungen (III) im Prepolymer beträgt vorzugsweise 1 bis 55,0 mol-%, insbesondere 10,0 bis 50,0 mol-%, bezogen auf die Gesamtmenge der Verbindungen der Formel (I), (II) und (III). Ist im speziellen Fall R³ ein Dimercaptodioxaoctan-Rest, so beträgt der Gewichtsanteil an (III) im Prepolymer bezogen auf die Gesamtmenge der Verbindungen (I), (II) und (III) mehr als 0,5%, bevorzugt mehr als 5%.

Verfahren zur Herstellung der Verbindungen der Formel (I) und (II) sind dem Fachmann beispielsweise aus DE 4234251 bekannt, auf deren Offenbarung hiermit explizit Bezug genommen wird. Dennoch hat es sich im Rahmen der vorliegenden Erfindung als ganz besonders günstig erwiesen, eine Mischung der Verbindungen der Formel (I) und (II) durch ein Verfahren herzustellen, bei welchem man 1,0 bis < 2,0 mol, vorzugsweise 1,1 bis 1,8 mol, zweckmäßigerweise 1,2 bis 1,6 mol, insbesondere 1,2 bis 1,5 mol, mindestens einer Verbindung der Formel (IV) 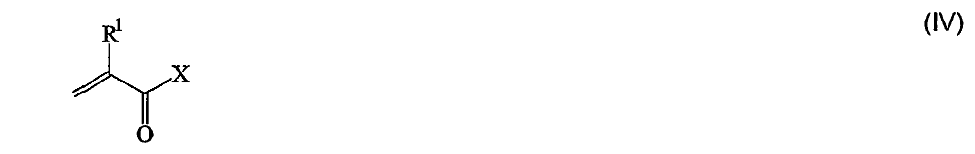 mit einem mol mindestens eines Polythiols der Formel (V) umsetzt

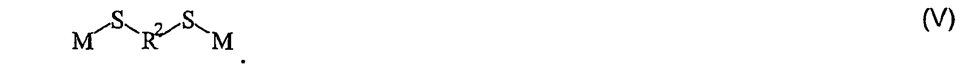

Der Rest X steht für Halogen, insbesondere Chlor oder Brom, oder für einen Rest 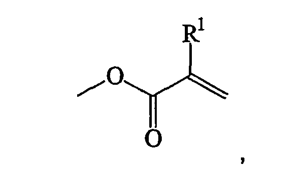 d. h. die Verbindungen der Formel (IV) umfassen unter anderem Acrylsäurechlorid, Methacrylsäurechlorid, Acrylsäureanhydrid und Methacrylsäureanhydrid, wobei der Einsatz von Acrylsäureanhydrid, Methacrylsäureanhydrid oder Mischungen der beiden besonders bevorzugt ist.

M kennzeichnet jeweils unabhängig voneinander Wasserstoff oder ein Metallkation. Bevorzugte Metallkationen leiten sich von Elementen mit einer Elektronegativität kleiner 2,0, zweckmäßigerweise kleiner 1,5, ab, wobei Alkalimetallkationen, insbesondere Na⁺, K⁺, Rb⁺, Cs⁺, und Erdalkalimetallkationen, insbesondere Mg²⁺, Ca²⁺, Sr²⁺, Ba²⁺, besonders bevorzugt sind. Ganz besonders günstige Ergebnisse können mit den Metallkationen Na⁺ und K⁺ erzielt werden.

In diesem Zusammenhang besonders geeignete Polythiole der Formel (V) umfassen 1,2-Ethandithiol, 1,2-Propandithiol, 1,3-Propandithiol, 1,2-Butandithiol, 1,3-Butandithiol, 1,4-Butandithiol, 2-Methylpropan-1,2-dithiol, 2-Methylpropan-1,3-dithiol, 3,6-Dioxa-1,8-octandithiol (Dimercaptodioxaoctan=DMDO), Ethylcyclohexyldimercaptane, die durch Umsetzung von 4-Ethenyl-cyclohexen mit Schwefelwasserstoff erhältlich sind, ortho-Bis(mercaptomethyl)benzol, meta-Bis(mercaptomethyl)benzol, para-Bis(mercaptomethyl)benzol, Verbindungen der Formel (V) 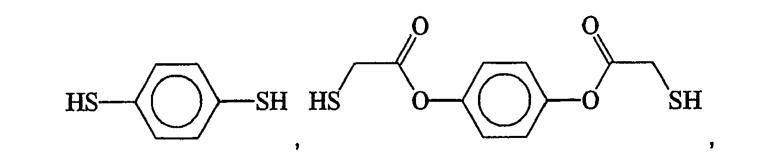 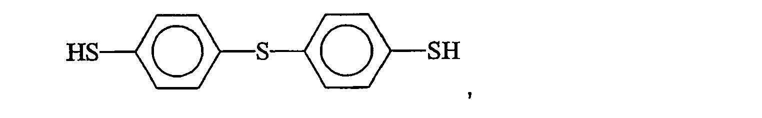 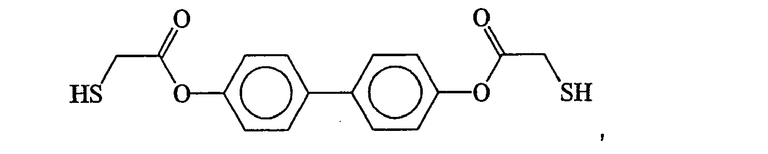 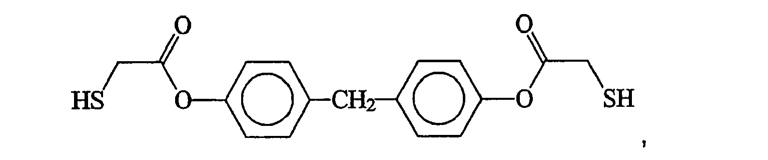 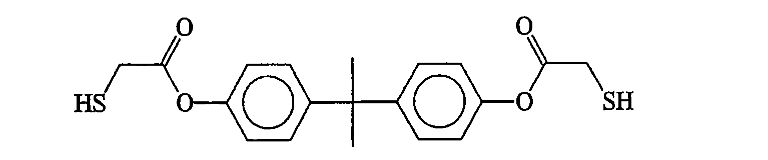 sowie Verbindungen der Formel 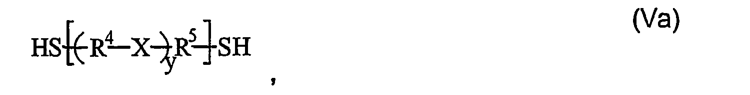 wobei R⁴ jeweils unabhängig voneinander ein linearer oder verzweigter, aliphatischer oder cycloaliphatischer Rest, wie beispielsweise eine Methylen-, Ethylen-, Propylen-, iso-Propylen-, n-Butylen-, iso-Butylen-, tert.-Butylen- oder Cyclohexylen-Gruppe ist. Dabei umfassen im Sinne der vorliegenden Erfindung cycloaliphatische Reste auch bi-, tri- und polycyclische aliphatische Reste. Der Rest X ist jeweils unabhängig voneinander Sauerstoff oder Schwefel und der Rest R⁵ steht für einen linearen oder verzweigten, aliphatischen oder cycloaliphatischen Rest, wie beispielsweise eine Methylen-, Ethylen-, Propylen-, iso-Propylen-, n-Butylen-, iso-Butylen-, tert.-Butylen- oder Cyclohexylen-Gruppe. Dabei umfassen im Rahmen der vorliegenden Erfindung cycloaliphatische Reste auch bi-, tri- und polycyclische aliphatische Reste. y ist eine ganze Zahl zwischen 1 und 10, insbesondere 1, 2, 3 und 4.

Bevorzugte Verbindungen der Formel (Va) umfassen: 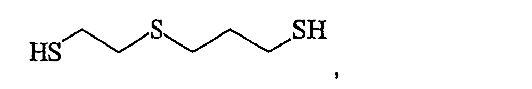 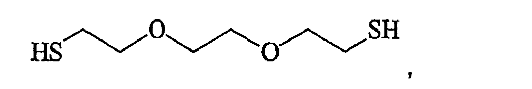 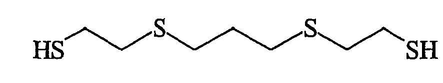 und

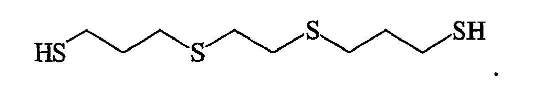

Im Rahmen einer ganz besonders bevorzugten Ausführungsform dieses Verfahrens wird 1,2-Ethandithiol als Verbindung der Formel (V) eingesetzt.

Gemäß diesem Verfahren werden die Verbindung(en) der Formel (IV) in mindestens einem inerten, organischen Lösungsmittel L und die Verbindung(en) der Formel (V) in wässrig-alkalischer Lösung zur Reaktion gebracht, wobei der Begriff "inertes, organisches Lösungsmittel" für solche organischen Lösungsmittel steht, die unter den jeweiligen Reaktionsbedingungen nicht mit den im Reaktionssystem vorliegenden Verbindungen reagieren.

Vorzugsweise weist mindestens ein Lösungsmittel L eine relative Dielektrizitätskonstante > 2,6, vorzugsweise > 3,0, zweckmäßigerweise > 4,0, insbesondere > 5,0, jeweils gemessen bei 20°C, auf. In diesem Zusammenhang bezeichnet die relative Dielektrizitätskonstante eine dimensionslose Zahl, die angibt, auf das Wievielfache sich die Kapazität C eines (theoretisch) im Vakuum befindlichen Kondensators erhöht, wenn man zwischen die Platten Stoffe mit dielektrischen Eigenschaften, sogenannte Dielektrika bringt. Dieser Wert wird bei 20°C gemessen und auf niedrige Frequenzen (ω → 0) extrapoliert. Für weitere Details wird auf die gängige Fachliteratur, insbesondere auf Ullmann Encyklopädie der technischen Chemie, Band 2/1 Anwendung physikalischer und physikalisch-chemischer Methoden im Laboratorium, Stichwort: Dielektrizitätskonstante, S. 455 - 479 verwiesen. Dielektrizitätswerte von Lösungsmittel sind u. a. im Handbook of Chemistry and Physics, 71. Auflage, CRC Press, Baco Raton, Ann Arbor, Boston, 1990-1991, S. 8-44, 8-46 und 9-9 bis 9-12 angegeben.

Im Rahmen dieses Verfahrens ist es weiterhin besonders vorteilhaft, wenn das Lösungsmittel und die wässrige Lösung während der Umsetzung zwei Phasen ausbilden und nicht homogen mischbar sind. Zu diesem Zweck weist das Lösungsmittel vorzugsweise eine Wasserlöslichkeit, gemessen bei 20°C, kleiner 10 g Wasser bezogen auf 100 g Lösungsmittel auf.

Erfindungsgemäß bevorzugte Lösungsmittel L umfassen
aliphatische Ether, wie Diethylether (4,335), Dipropylether, Diisopropylether; cycloaliphatische Ether, wie Tetrahydrofuran (7,6);
aliphatische Ester, wie Methylformiat (8,5), Ethylformiat, Propylformiat, Methylacetat, Essigester, n-Butylacetat (5,01), Methylpropionat, Methylbutyrat (5,6), Ethylbutyrat, 2-Methoxyethylacetat;
aromatische Ester, wie Benzylacetat, Dimethylphthalat, Methylbenzoat (6,59), Ethylbenzoat (6,02), Methylsalicylat, Ethylsalicylat, Phenylacetat (5,23); aliphatische Ketone, wie Aceton, Methylethylketon (18,5), Pentanon-2 (15,4), Pentanon-3 (17,0), Methylisoamylketon, Methylisobutylketon (13,1);
aromatische Ketone, wie Acetophenon;
Nitroaromaten, wie Nitrobenzol, o-Nitrotoluol (27,4), m-Nitrotoluol (23), p-Nitrotoluol;
halogenierte Aromaten, wie Chlorbenzol (5,708), o-Chlorotoluol (4,45), m-Chlorotoluol (5,55), p-Chlorotoluol (6,08), o-Dichlorobenzol, m-Dichlorobenzol;
Heteroaromaten, wie Pyridin, 2-Methylpyridin (9,8), Chinolin, Isochinolin;
oder Mischungen dieser Verbindungen, wobei die Angaben die Klammern die jeweiligen, zugehörigen, relativen Dielektrizitätskonstanten bei 20°C sind.

Dabei sind für die Zwecke des vorliegenden Verfahrens aliphatische Ester und cycloaliphatische Ether, insbesondere Ethylacetat und Tetrahydrofuran ganz besonders geeignet.

Im Rahmen des vorliegenden Verfahrens kann das Lösungsmittel L sowohl allein als auch eine Lösungsmittelmischung eingesetzt werden, wobei nicht alle im Gemisch enthaltenen Lösungsmittel das vorstehende Dielektrizitätskriterium erfüllen müssen. Beispielsweise können auch Tetrahydrofuran/Cyclohexan-Mischungen erfindungsgemäß eingesetzt werden. Jedoch hat es sich als zweckmäßig erwiesen, dass das Lösungsmittelgemisch eine relative Dielektrizitätskonstante > 2,6, vorzugsweise > 3,0, zweckmäßigerweise > 4,0, insbesondere > 5,0, jeweils gemessen bei 20°C, aufweist. Besonders vorteilhafte Ergebnisse können mit Lösungsmittelmischungen erzielt werden, welche nur Lösungsmittel mit einer relativen Dielektrizitätskonstante > 2,6, vorzugsweise > 3,0, zweckmäßigerweise > 4,0, insbesondere > 5,0, jeweils gemessen bei 20°C, enthalten.

Die wässrig-alkalische Lösung der Verbindung(en) der Formel (V) enthält vorzugsweise 1,1 bis 1,5 val (Äquivalente) mindestens einer Bronsted-Base, bezogen auf die Gesamtmenge an Verbindung(en) der Formel (IV). Bevorzugte Bronsted-Basen im Sinne der vorliegenden Erfindung umfassen Alkalihydroxide und Erdalkalihydroxide, insbesondere Natriumhydroxid und Kaliumhydroxid.

Die Durchführung der Umsetzung kann in prinzipiell in jeder erdenklichen Weise erfolgen, Beispielsweise ist es möglich, die Verbindung(en) der Formel (IV) im Lösungsmittel(gemisch) L vorzulegen und die wässrig-alkalische Lösung den Verbindung(en) der Formel (V) schrittweise oder kontinuierlich zuzugeben. Dennoch hat es sich im Rahmen des vorliegenden Verfahrens als ganz besonders günstig erwiesen, die Verbindung(en) der Formel (IV) in mindestens einem inerten, organischen Lösungsmittel L und die Verbindung(en) der Formel (V) in wässrig-alkalischer Lösung parallel dem Reaktionsgefäß zuzudosieren.

Die Reaktionstemperatur kann man über einen weiten Bereich variieren, aber häufig liegt die Temperatur im Bereich von 20,0 °C bis 120,0 °C, vorzugsweise im Bereich von 20,0 °C bis 80,0 °C. Ähnliches gilt für den Druck bei der die Umsetzung vollzogen wird. So kann die Reaktion sowohl bei Unterdruck als auch bei Überdruck stattfinden. Vorzugsweise wird sie aber bei Normaldruck durchgeführt. Obwohl die Reaktion auch unter Luft stattfinden kann, hat es sich im Rahmen des vorliegenden Verfahrens als ganz besonders günstig erwiesen die Umsetzung unter Schutzgasatmosphäre, vorzugsweise Stickstoff und/oder Argon, durchzuführen, wobei vorzugsweise ein geringer Sauerstoffanteil vorhanden ist.

Günstigerweise wird das Reaktionsgemisch in einem weiteren Schritt mit einer Bronsted-Säure umgesetzt, vorzugsweise bis die wässrige Lösung bei 20°C einen pH-Wert kleiner 7,0, zweckmäßigerweise kleiner 6,0, insbesondere kleiner 5,0, aufweist. Einsetzbare Säuren umfassen in diesem Zusammenhang anorganische Mineralsäuren, wie Salzsäure, Schwefelsäure, Phosphorsäure, organische Säuren, wie Essigsäure, Propionsäure, und saure Ionenaustauscher, insbesondere saure Kunstharzionenaustauscher, wie beispielsweise ^{®}Dowex M-31 (H). Dabei hat sich der Einsatz von sauren Kunstharzionenaustauschern mit Beladungen von mindestens 1,0 meq, vorzugsweise mindestens 2,0 meq, insbesondere mindestens 4,0 meq, H⁺-Ionen bezogen auf 1 g getrockneten Ionenaustauscher, Korngrößen von 10-50 mesh und Porositäten im Bereich von 10 bis 50 % bezogen auf das Gesamtvolumen des Ionenaustauschers ganz besonders bewährt.

Zur Isolierung der Verbindungen der Formel (I) und (II) wird zweckmäßigerweise die aus dem Lösungsmittel L bestehende organische Phase abgetrennt, gegebenenfalls gewaschen, getrocknet und das Lösungsmittel verdampft.

Bei der Umsetzung der Verbindung(en) der Formel (IV) mit der bzw. den Verbindung(en) der Formel (V) können Inhibitoren zugesetzt werden, die eine radikalische Polymerisation der (Meth)acrylgruppen während der Reaktion verhindern. Diese Inhibitoren sind in der Fachwelt weithin bekannt.

Eingesetzt werden hauptsächlich 1,4-Dihydroxybenzole. Es können jedoch auch anders substituierte Dihydroxybenzole zum Einsatz kommen. Allgemein lassen sich derartige Inhibitoren mit der allgemeinen Formel (VI) wiedergeben 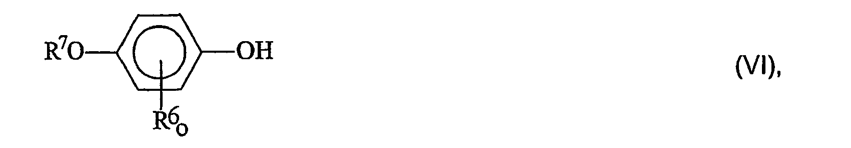 worin
R⁶ einen linearen oder verzweigten Alkylrest mit eins bis acht Kohlenstoffatomen, Halogen oder Aryl bedeutet, vorzugsweise einen Alkylrest mit eins bis vier Kohlenstoffatomen, besonders bevorzugt Methyl, Ethyl, n-Propyl, iso-Propyl, n-Butyl, iso-Butyl, sec-Butyl, tert.-Butyl, Cl, F oder Br;
o eine ganze Zahl im Bereich von eins bis vier, vorzugsweise eins oder zwei ist; und
R⁷ Wasserstoff, einen linearen oder verzweigten Alkylrest mit eins bis acht Kohlenstoffatomen oder Aryl bedeutet, vorzugsweise einen Alkylrest mit eins bis vier Kohlenstoffatomen, besonders bevorzugt Methyl, Ethyl, n-Propyl, iso-Propyl, n-Butyl, iso-Butyl, sec-Butyl oder tert.-Butyl.

Es können jedoch auch Verbindungen mit 1,4-Benzochinon als Stammverbindung eingesetzt werden. Diese lassen sich mit der Formel (VII) beschreiben 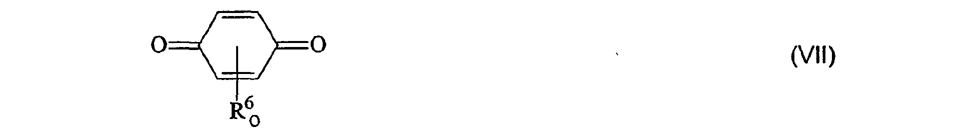 worin
R⁶ und o die oben angegebene Bedeutung haben.

Ebenso werden Phenole der allgemeinen Struktur (VIII) eingesetzt 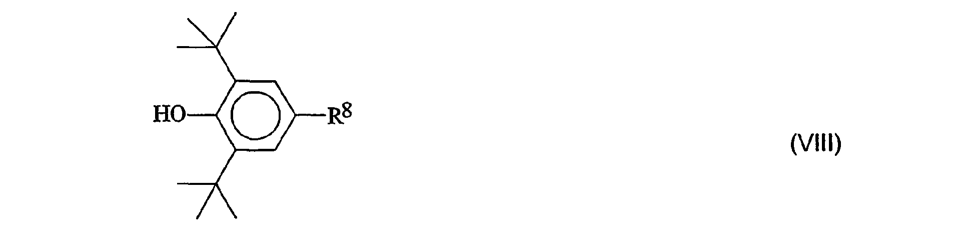 worin
R⁸ einen linearen oder verzweigten Alkylrest mit eins bis acht Kohlenstoffatomen, Aryl oder Aralkyl, Propionsäureester mit 1 bis 4 wertigen Alkoholen, welche auch Heteroatome wie S, O und N enthalten können, vorzugsweise einen Alkylrest mit eins bis vier Kohlenstoffatomen, besonders bevorzugt Methyl, Ethyl, n-Propyl, iso-Propyl, n-Butyl, iso-Butyl, sec-Butyl, tert.-Butyl bedeutet.

Eine weitere vorteilhafte Substanzklasse stellen gehinderte Phenole auf Basis von Triazinderivaten der Formel (IX) dar 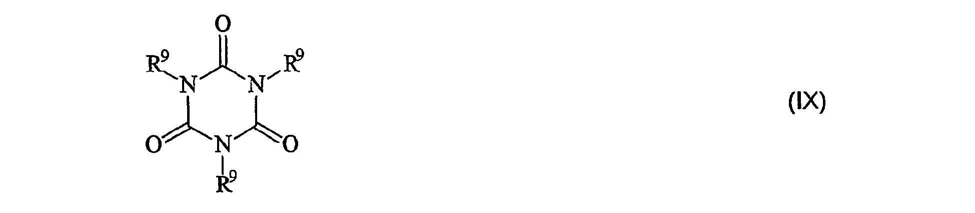 mit R⁹ = Verbindung der Formel (X) 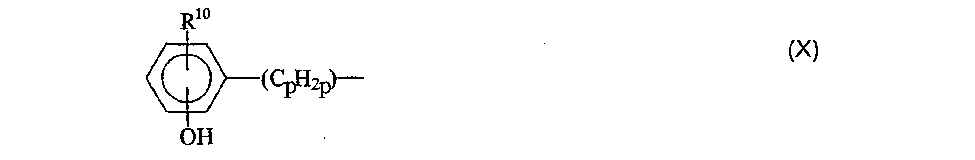 worin
R¹⁰ = CₚH₂ₚ₊₁
mit p = 1 oder 2 ist.

Besonders erfolgreich werden die Verbindungen 1,4-Dihydroxybenzol, 4-Methoxyphenol, 2,5-Dichloro-3,6-dihydroxy-1,4-benzochinon, 1,3,5-Trimethyl-2,4,6-tris-(3,5-di-tert.-butyl-4-hydroxybenzyl)benzol, 2,6-Di-tert.-butyl-4-methylphenol, 2,4-Dimethyl-6-tert.-butylphenol, 2,2-Bis [3,5-Bis(1,1-dimethylethyl)-4-hydroxyphenyl-1-oxopropoxymethyl)]1,3-propandiylester, 2,2'-Thiodiethylbis-[3-(3,5-di-tert.butyl-4-hydroxyphenyl)]propionat, Octadecyl-3-(3,5-di-tert.-butyl-4-hydroxyphenyl)propionat, 3,5-Bis(1,1-dimethylethyl-2,2-Methylenbis-(4-methyl-6-tert.-butyl)phenol, Tris-(4-tert.-butyl-3-hydroxy-2,6-dimethylbenzyl)-s-triazin-2,4,6-(1H,3H,5H)trion, Tris(3,5-ditert.butyl-4-hydroxy)-s-triazin-2,46-(1 H, 3H,5H)trion oder tert.-Butyl-3,5-dihydroxybenzol eingesetzt.

Bezogen auf das Gewicht der gesamten Reaktionsmischung beträgt der Anteil der Inhibitoren einzeln oder als Mischung im allgemeinen 0,01 - 0,50 % (wt/wt), wobei man die Konzentration der Inhibitoren vorzugsweise so auswählt, dass die Farbzahl gemäß DIN 55945 nicht beeinträchtigt wird. Viele dieser Inhibitoren sind kommerziell erhältlich.

Im Rahmen der vorliegenden Erfindung enthält die Mischung neben dem Prepolymer, hergestellt aus Verbindungen der Formel (I), (II) und (III) weiterhin mindestens ein radikalisch polymerisierbares Monomer (A) mit mindestens zwei endständigen Methacrylat Gruppen.

Di(meth)acrylate, die darunter fallen sind zum Beispiel Polyoxyethylen- und Polyoxypropylen-Derivate der (Meth)acrylsäure, wie Triethylenglykol(meth)acrylat, Tetraethylenglykol(meth)acrylat, Tetrapropylenglykol(meth)acrylat, sowie 1,4-Butandioldi(meth)acrylat, Diethylenglykoldi(meth)acrylat, Dipropylenglykoldi(meth)acrylat, Triethylenglykoldi(meth)acrylat, Tripropylenglykoldi(meth)acrylat, Tetraethylenglykoldi(meth)acrylat, Tetrapropylenglykoldi(meth)acrylat, Polyethylenglykoldi(meth)acrylat (vorzugsweise mit Gewichtsmittel der Molekulargewichte im Bereich von 200 - 5000000 g/mol, zweckmäßigerweise im Bereich von 200 bis 25000 g/mol, insbesondere im Bereich von 200 bis 1000 g/mol), Polypropylenglykoldi(meth)acrylat (vorzugsweise mit Gewichtsmittel der Molekulargewichte im Bereich von 200 - 5000000 g/mol, zweckmäßigerweise im Bereich von 250 bis 4000 g/mol, insbesondere im Bereich von 250 bis 1000 g/mol), 2,2'-Thiodiethanoldi(meth)acrylat (Thiodiglykoldi(meth)acrylat),
3,9-Di(meth)acryloyloxymethyltricyclo[5.2.1.0(2.6)]decan, insbesondere 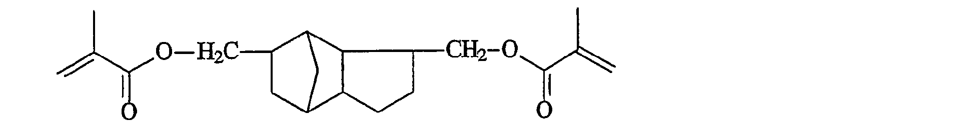 3,8-Di(meth)acryloyloxymethyltricyclo[5.2.1.0(2.6)]decan,
4,8-Di(meth)acryloyloxymethyltricyclo[5.2.1.0(2.6)]decan,
4,9-Di(meth)acryloyloxymethyltricyclo[5.2.1.0(2.6)]decan, ethoxyliertes Bisphenol A-Di(meth)acrylat, insbesondere 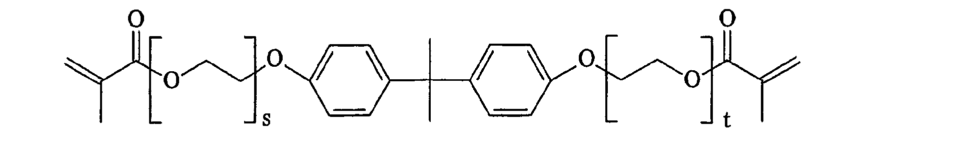 wobei s und t größer gleich null sind und die Summe s + t vorzugsweise im Bereich von 1 bis 30, insbesondere im Bereich von 2 bis 10 liegt,
und durch Umsetzung von Diisocyanaten mit 2 Äquivalenten Hydroxyalkyl(meth)acrylat erhältliche Di(meth)acrylate, insbesondere 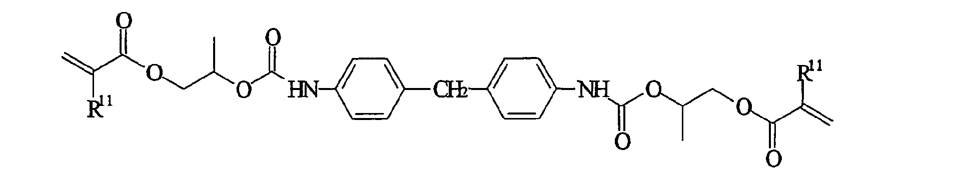 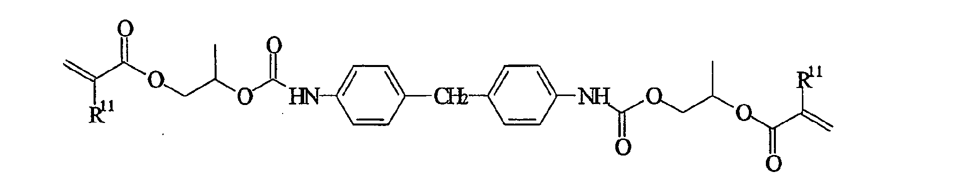 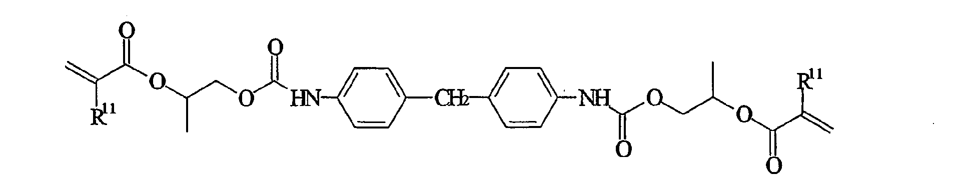 wobei der Rest R¹¹ jeweils unabhängig voneinander Wasserstoff oder einen Methylrest bedeutet,
Tri(meth)acrylate, wie Trimethyloylpropantri(meth)acrylat und
Glycerintri(meth)acrylat oder auch (Meth)acrylate von ethoxyliertem bzw. propoxylierten Glycerin, Trimethylolpropan oder anderen Alkoholen mit mehr als 2 Hydroxygruppen.

Als Monomer (A) haben sich Di(meth)acrylate der Formel (XI) 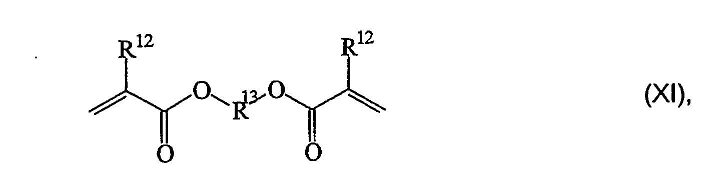 besonders bewährt. Dabei bezeichnet R¹² jeweils unabhängig voneinander Wasserstoff oder Methyl. R¹³ kennzeichnet einen linearen oder verzweigten Alkyl-, Cycloalkylrest oder einen aromatischen Rest mit vorzugsweise 1 bis 100, bevorzugt 1 bis 40, vorzugsweise 1 bis 20, zweckmäßigerweise 1 bis 8, insbesondere 1 bis 6, Kohlenstoffatomen, wie beispielsweise eine Methyl-Ethyl-, Propyl-, iso-Propyl-, n-Butyl, iso-Butyl-, tert-Butyl-, Cyclopentyl-, Cyclohexyl- oder Phenylgruppe. Dabei umfassen im Rahmen der vorliegenden Erfindung cycloaliphatische Reste auch bi-, tri- und polycyclische aliphatische Reste. Lineare oder verzweigte Alkyl- oder Cycloalkylreste mit 1 bis 6 Kohlenstoffatomen werden als R¹⁸ ganz besonders bevorzugt.

Der Rest R¹³ ist vorzugsweise ein linearer oder verzweigter, aliphatischer oder cycloaliphatischer Rest, wie beispielsweise eine Methylen-, Ethylen-, Propylen-, iso-Propylen-, n-Butylen-, iso-Butylen-, tert.-Butylen- oder Cyclohexylen-Gruppe oder ein Rest der allgemeinen Formel 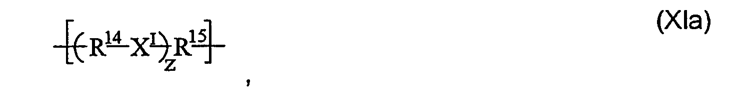 wobei der Rest R¹⁵ für einen linearen oder verzweigten, aliphatischen oder cycloaliphatischen Rest oder einen substituierten oder unsubstituierten aromatischen oder heteroaromatischen Rest, wie beispielsweise eine Methylen-, Ethylen-, Propylen-, iso-Propylen-, n-Butylen-, iso-Butylen-, tert.-Butylen- oder Cyclohexylen-Gruppe, oder zweibindige aromatische oder heteroaromatsiche Gruppen steht, die sich von Benzol, Naphthalin, Biphenyl, Diphenylether, Diphenylmethan, Diphenyldimethylmethan, Bisphenon, Diphenylsulfon, Chinolin, Pyridin, Anthracen und Phenanthren ableiten. Dabei umfassen im Rahmen der vorliegenden Erfindung cycloaliphatische Reste auch bi-, tri- und polycyclische aliphatische Reste. Der Rest R¹⁴ bezeichnet jeweils unabhängig voneinander einen linearen oder verzweigten, aliphatischen oder cycloaliphatischen Rest oder einen substituierten oder unsubstituierten aromatischen oder heteroaromatischen Rest, wie beispielsweise eine Methylen-, Ethylen-, Propylen-, iso-Propylen-, n-Butylen-, iso-Butylen-, tert.-Butylen- oder Cyclohexylen-Gruppe, oder zweibindige aromatische oder heteroaromatsiche Gruppen, die sich von Benzol, Naphthalin, Biphenyl, Diphenylether, Diphenylmethan, Diphenyldimethylmethan, Bisphenon, Diphenylsulfon, Chinolin, Pyridin, Anthracen und Phenanthren ableiten. Dabei umfassen im Rahmen der vorliegenden Erfindung cycloaliphatische Reste auch bi-, tri- und polycyclische aliphatische Reste ist. Der Rest X¹ ist jeweils unabhängig voneinander Sauerstoff, Schwefel, eine Estergruppe der allgemeinen Formel (XIb), (XIc), 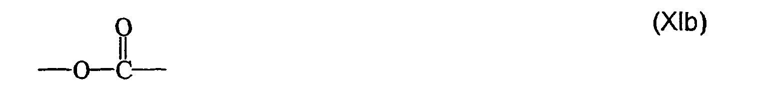 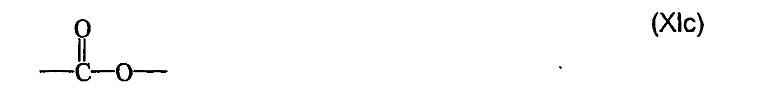 eine Urethangruppe der allgemeinen Formel (XId), (XIe), (XIf) oder (XIg), 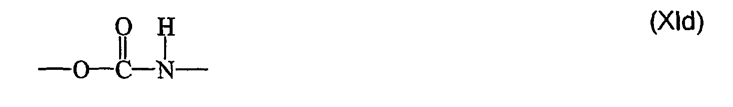 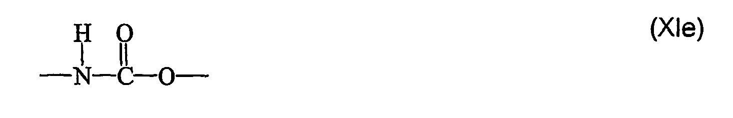 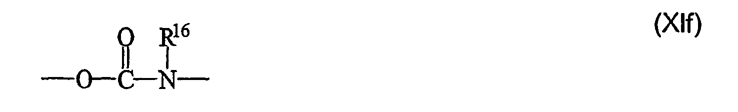 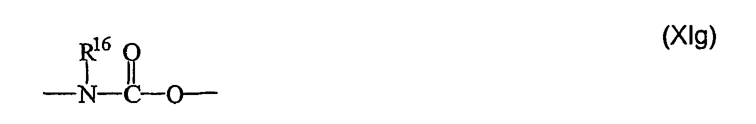 eine Thiourethangruppe der allgemeinen Formel (XIh), (XIi), (XIj) oder (XIk), 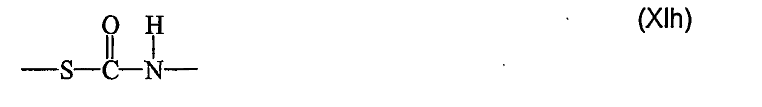 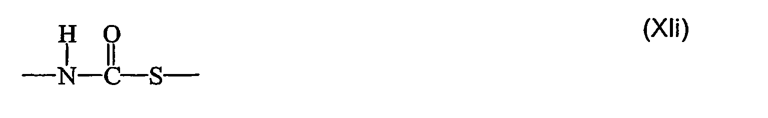 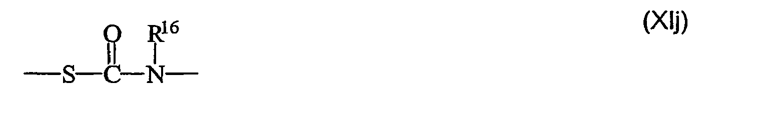 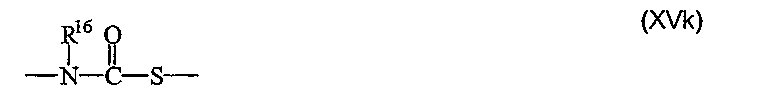 eine Dithiourethangruppe der allgemeinen Formel (XII), (XIm), (XIn) oder (XIo) 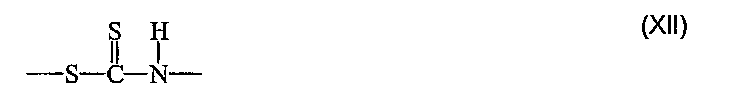 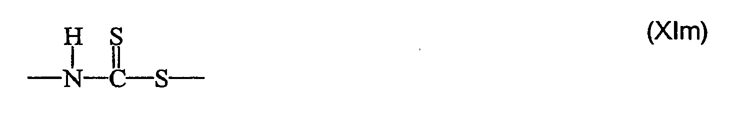 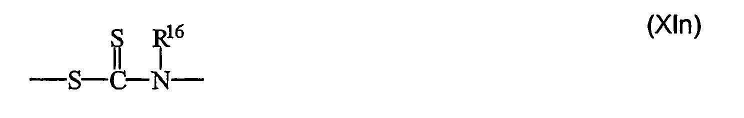 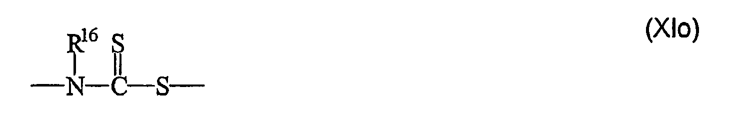 oder eine Thiocarbamatgruppe der allgemeinen Formel (XIp), (XIq), (XIr) oder (XIs) 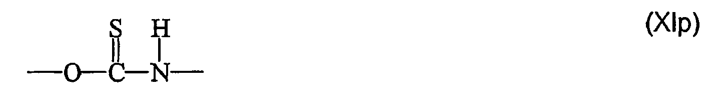 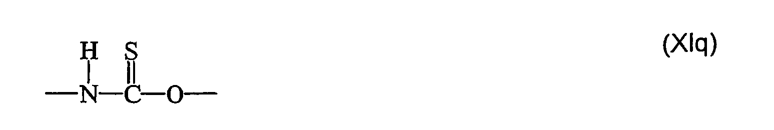 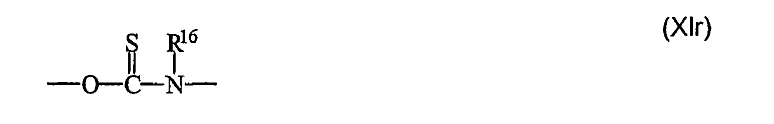 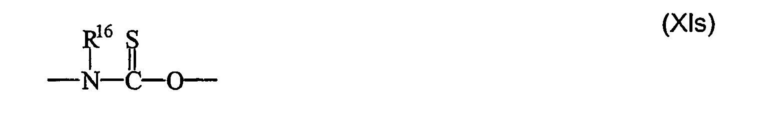 vorzugsweise Sauerstoff, wobei der Rest R¹⁶ für einen linearen oder verzweigten, aliphatischen oder cycloaliphatischen Rest oder einen substituierten oder unsubstituierten aromatischen oder heteroaromatischen Rest, wie beispielsweise eine Methyl-, Ethyl-, Propyl-, iso-Propyl-, n-Butyl-, iso-Butyl-, tert.-Butyl- oder Cyclohexyl-Gruppe, oder einbindige aromatische oder heteroaromatsiche Gruppen steht, die sich von Benzol, Naphthalin, Biphenyl, Diphenylether, Diphenylmethan, Diphenyldimethylmethan, Bisphenon, Diphenylsulfon, Chinolin, Pyridin, Anthracen und Phenanthren ableiten. Dabei umfassen im Rahmen der vorliegenden Erfindung cycloaliphatische Reste auch bi-, tri- und polycyclische aliphatische Reste. z ist eine ganze Zahl zwischen 1 und 1000, zweckmäßigerweise zwischen 1 und 100, insbesondere zwischen 1 und 25.

Besonders bevorzugte Di(meth)acrylate der Formel (XI) umfassen Ethylenglykoldi(meth)acrylat, ethoxyliertes Bisphenol A-Di(meth)acrylat, insbesondere 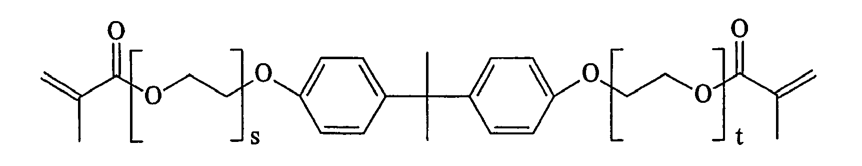 wobei s und t größer gleich null sind und die Summe s + t vorzugsweise im Bereich von 1 bis 20, insbesondere im Bereich von 2 bis 10 liegt,
und durch Umsetzung von Diisocyanaten mit 2 Äquivalenten Hydroxyalkyl(meth)acrylat erhältliche Di(meth)acrylate, insbesondere 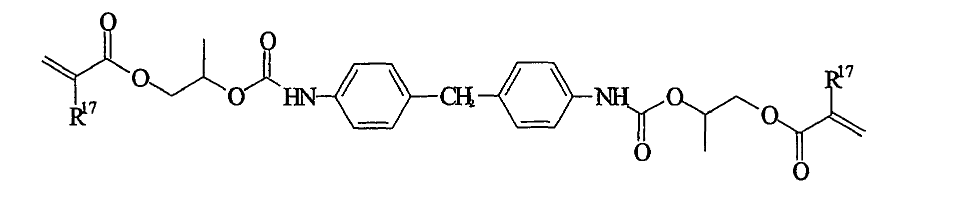 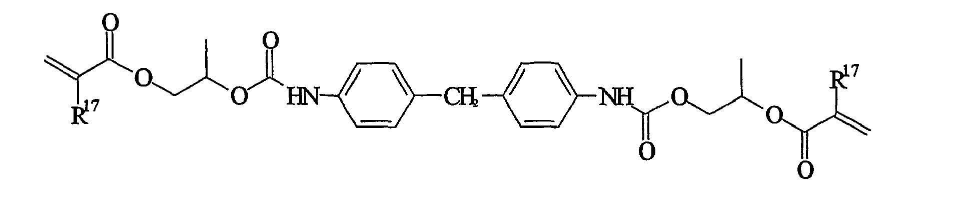 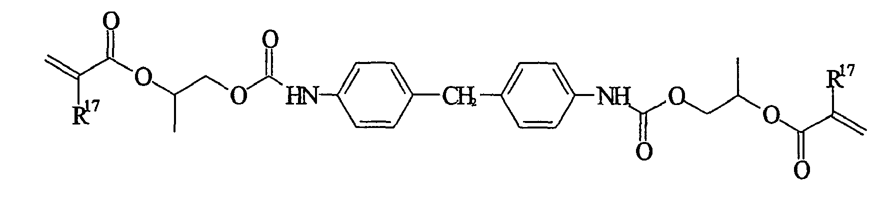 wobei
der Rest R¹⁷ jeweils unabhängig voneinander Wasserstoff oder einen Methylrest bedeutet,
3,8-Di(meth)acryloyloxymethyltricyclo[5.2.1.0(2.6)]decan,
3,9-Di(meth)acryloyloxymethyltricyclo[5.2.1.0(2.6)]decan,
4,8-Di(meth)acryloyloxymethyltricyclo[5.2.1.0(2.6)]decan,
4,9-Di(meth)acryloyloxymethyltricyclo[5.2.1.0(2.6)]decan,
Thiodiglykoldi(meth)acrylat, Polypropylenglykoldi(meth)acrylat, vorzugsweise mit einem Gewichtsmittel des Molekulargewichts im Bereich von 200 bis 1000 g/mol, und/oder Polyethylenglykoldi(meth)acrylat, vorzugsweise mit einem Gewichtsmittel des Molekulargewichts im Bereich von 200 bis 1000 g/mol.
Dabei werden die Dimethacrylate der genannten Verbindungen besonders bevorzugt. Ganz besonders vorteilhafte Ergebnisse werden unter Verwendung von Polyethylenglykoldimethacrylat, vorzugsweise mit einem Gewichtsmittel des Molekulargewichts im Bereich von 200 bis 1000 g/mol, erzielt.

Der Anteil an Monomer (A) beträgt 2-50 Gew.-%, insbesondere 10-30 Gew.-%, bezogen auf alle in der Mischung eingesetzten Monomere.

Im Rahmen der vorliegenden Erfindung enthält die Mischung neben dem Prepolymer, bestehend aus den Verbindungen der Formel (I), (II) und (III) und mindestens einem radikalisch polymerisierbaren Monomer (A) auch eine aromatische Vinylverbindung.

Bei den aromatischen Vinylverbindungen werden bevorzugt Styrole, substituierte Styrole mit einem Alkylsubstituenten in der Seitenkette, wie z. B. α-Methylstyrol und α-Ethylstyrol, substituierte Styrole mit einem Alkylsubstituenten am Ring, wie Vinyltoluol und p-Methylstyrol, halogenierte Styrole, wie beispielsweise Monochlorstyrole, Dichlorstyrole, Tribromstyrole und Tetrabromstyrole
sowie Diene, wie beispielsweise 1,2-Divinylbenzol, 1,3-Divinylbenzol, 1,4-Divinylbenzol, 1,2-Diisopropenylbenzol, 1,3- Diisopropenylbenzol und 1,4-Diisopropenylbenzol eingesetzt.

Der Anteil der aromatischen Vinylverbindungen beträgt 5-40 Gew.-%, bevorzugt 10-30 Gew.-%, besonders bevorzugt 15-25 Gew.-%, bezogen auf die Gesamtmenge der Verbindungen der Formel (I), (II) und (III), die im Prepolymer eingesetzt werden, dem radikalisch polymerisierbaren Monomer (A) sowie der aromatischen Vinylverbindungen und sonstiger optional eingesetzter Monomere.

Überraschend verbessert der Zusatz an Monomer (A) und der aromatischen Vinylverbindung die mechanischen Eigenschaften des erfindungsgemäßen Kunststoffmaterials ohne dessen optischen Eigenschaften nachteilig zu beeinflussen. In vielen Fällen kann man einen günstigen Einfluss auf die optischen Eigenschaften feststellen.

Gemäß einem besonderen Aspekt der vorliegenden Erfindung können Verbindungen vorzugsweise linear aufgebaute Moleküle unterschiedlicher Kettenlänge (asymmetrische Vernetzer) der allgemeinen Formel (XII) enthalten sein 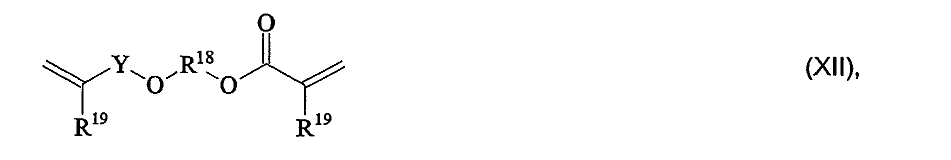 worin der Rest R¹⁹ unabhängig ein Wasserstoffatom, ein Fluoratom und/oder eine Methylgruppe, der Rest R¹⁸ eine verbindende Gruppe, die vorzugsweise 1 bis 1000, insbesondere 2 bis 100 Kohlenstoffatome umfasst, und der Rest Y eine Bindung oder eine verbindende Gruppe mit 0 bis 1000 Kohlenstoffatomen, insbesondere 1 bis 1000 Kohlenstoffatomen und vorzugsweise 1 bis 100 Kohlenstoffatomen bedeutet. Über den Molekülteil R¹⁸ kann die Länge des Moleküls variiert werden. Verbindungen der Formel (XII) weisen an einem Ende des Moleküls eine endständige (Meth)acrylatfunktion, am anderen eine endständige, von einer Methacrylatfunktion verschiedene Gruppe auf. Zu den bevorzugten Gruppen Y gehören insbesondere eine Bindung (Vinyl-Gruppe), eine CH₂-Gruppe (Allyl-Gruppe) sowie aliphatische oder aromatische Gruppen mit 1 bis 20 Kohlenstoffatomen, wie beispielsweise eine von Benzol abgeleitete Gruppe, wobei die aliphatischen oder aromatischen Gruppen besonders bevorzugt eine Urethangruppe aufweisen.

Der Rest R¹⁸ ist vorzugsweise ein linearer oder verzweigter, aliphatischer oder cycloaliphatischer Rest, wie beispielsweise eine Methylen-, Ethylen-, Propylen-, iso-Propylen-, n-Butylen-, iso-Butylen-, tert.-Butylen- oder Cyclohexylen-Gruppe oder ein Rest der allgemeinen Formel 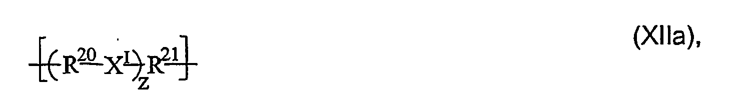 wobei der Rest R²¹ für einen linearen oder verzweigten, aliphatischen oder cycloaliphatischen Rest oder einen substituierten oder unsubstituierten aromatischen oder heteroaromatischen Rest, wie beispielsweise eine Methylen-, Ethylen-, Propylen-, iso-Propylen-, n-Butylen-, iso-Butylen-, tert.-Butylen- oder Cyclohexylen-Gruppe, oder zweibindige aromatische oder heteroaromatsiche Gruppen steht, die sich von Benzol, Naphthalin, Biphenyl, Diphenylether, Diphenylmethan, Diphenyldimethylmethan, Bisphenon, Diphenylsulfon, Chinolin, Pyridin, Anthracen und Phenanthren ableiten. Dabei umfassen im Rahmen der vorliegenden Erfindung cycloaliphatische Reste auch bi-, tri- und polycyclische aliphatische Reste. Der Rest R²⁰ bezeichnet jeweils unabhängig voneinander einen linearen oder verzweigten, aliphatischen oder cycloaliphatischen Rest oder einen substituierten oder unsubstituierten aromatischen oder heteroaromatischen Rest, wie beispielsweise eine Methylen-, Ethylen-, Propylen-, iso-Propylen-, n-Butylen-, iso-Butylen-, tert.-Butylen- oder Cyclohexylen-Gruppe, oder zweibindige aromatische oder heteroaromatsiche Gruppen, die sich von Benzol, Naphthalin, Biphenyl, Diphenylether, Diphenylmethan, Diphenyldimethylmethan, Bisphenon, Diphenylsulfon, Chinolin, Pyridin, Anthracen und Phenanthren ableiten. Dabei umfassen im Rahmen der vorliegenden Erfindung cycloaliphatische Reste auch bi-, tri- und polycyclische aliphatische Reste. Der Rest X¹ ist jeweils unabhängig voneinander Sauerstoff, Schwefel, eine Estergruppe der allgemeinen Formel (XIIb), (XIIc), 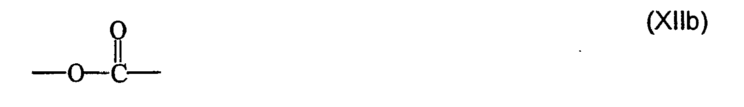 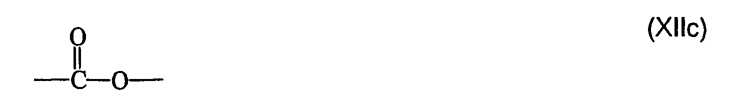 eine Urethangruppe der allgemeinen Formel (XIId), (XIIe), (XIIf) oder (XIIg), 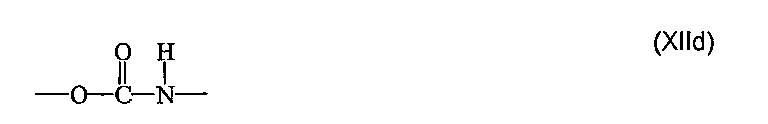 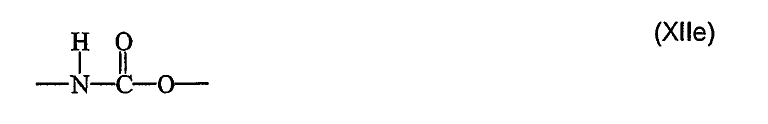 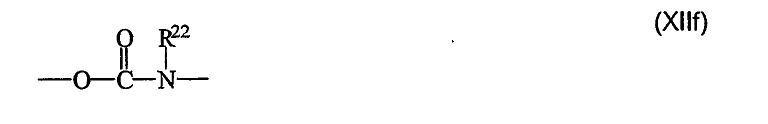 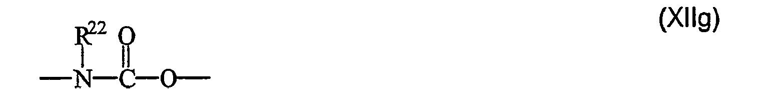 eine Thiourethangruppe der allgemeinen Formel (XIIh), (XIIi), (XIIj) oder (XIIk), 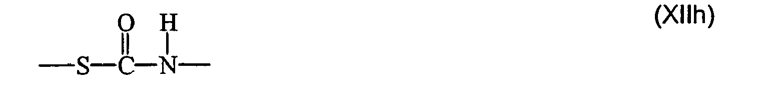 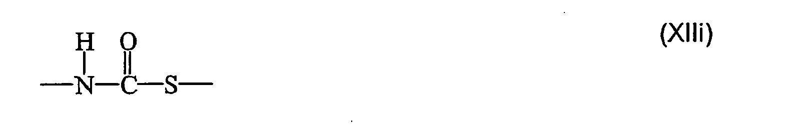 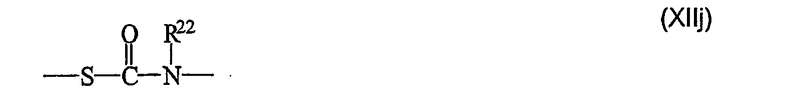 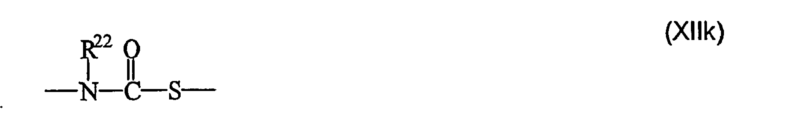 eine Dithiourethangruppe der allgemeinen Formel (XII), (XIIm), (XIIn) oder (XIIo) 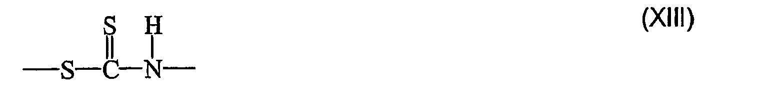 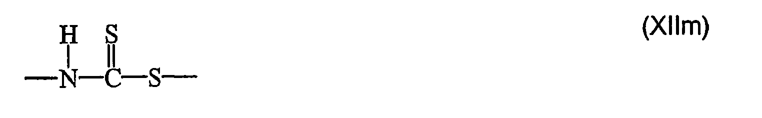 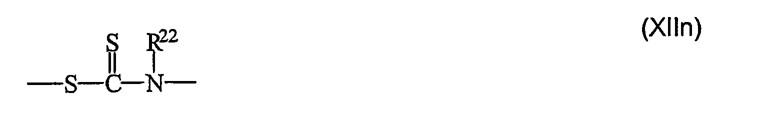 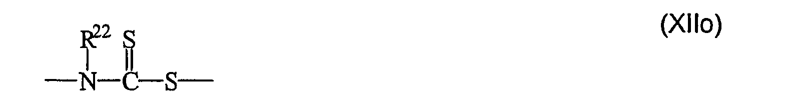 oder eine Thiocarbamatgruppe der allgemeinen Formel (XIIp), (XIIq), (XIIr) oder (XIIs) 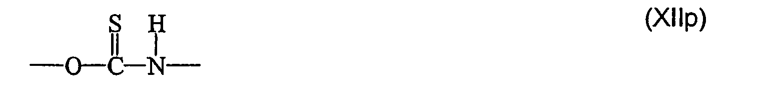 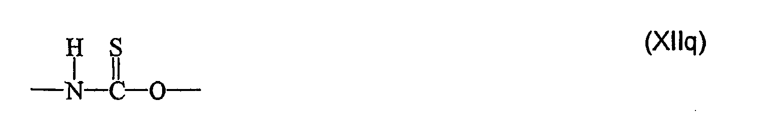 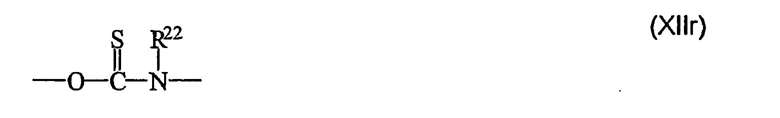 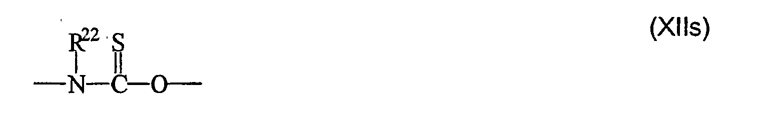 vorzugsweise Sauerstoff, wobei der Rest R²² für einen linearen oder verzweigten, aliphatischen oder cycloaliphatischen Rest oder einen substituierten oder unsubstituierten aromatischen oder heteroaromatischen Rest, wie beispielsweise eine Methyl-, Ethyl-, Propyl-, iso-Propyl-, n-Butyl-, iso-Butyl-, tert.-Butyl- oder Cyclohexyl-Gruppe, oder einbindige aromatische oder heteroaromatsiche Gruppen steht, die sich von Benzol, Naphthalin, Biphenyl, Diphenylether, Diphenylmethan, Diphenyldimethylmethan, Bisphenon, Diphenylsulfon, Chinolin, Pyridin, Anthracen und Phenanthren ableiten. Dabei umfassen im Rahmen der vorliegenden Erfindung cycloaliphatische Reste auch bi-, tri- und polycyclische aliphatische Reste. z ist eine ganze Zahl zwischen 1 und 1000, zweckmäßigerweise zwischen 1 und 100, insbesondere zwischen 1 und 25.
In einer besonderen Ausführungform der Formel (XII) handelt es sich um Verbindungen der Formel (XIII) 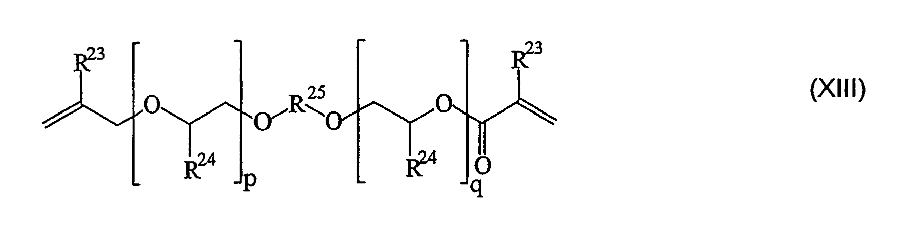 und/oder der Formel (XIV), 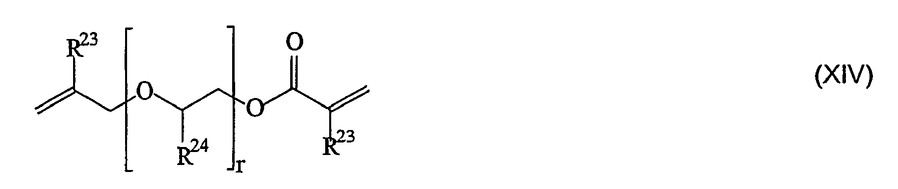 worin die Reste R²³ und R²⁴ jeweils unabhängig voneinander für Wasserstoff oder einen Methylrest stehen, und der Rest R²⁵ einen linearen oder verzweigten, aliphatischen oder cycloaliphatischen zweibindigen Rest oder einen substituierten oder unsubstituierten aromatischen oder heteroaromatischen zweibindigen Rest bezeichnet. Bevorzugte Reste wurden zuvor dargelegt.

Die Länge der Kette kann durch Variation der Anzahl an Polyalkylenoxideinheiten, vorzugsweise Polyethylenglykoleinheiten, beeinflusst werden. Als besonders geeignet für die hier beschriebene Lösung der Aufgabe haben sich Verbindungen der Formel (XIII) und (XIV) erwiesen, die für r, p und q unabhängig voneinander 1 - 40, vorzugsweise 5 - 20, insbesondere 7 bis 15 und besonders bevorzugt 8-12 Polyalkylenoxideinheiten aufweisen.

Erfindungsgemäß ganz besonders bevorzugte asymmetrische Vernetzer umfassen Verbindungen der Formel (XIV), insbesondere 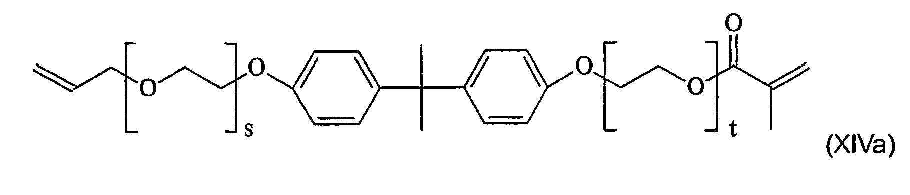 wobei s und t größer gleich null sind und die Summe s + t vorzugsweise im Bereich von 1 bis 20, insbesondere im Bereich von 2 bis 10 liegt, und Verbindungen der Formel (XIII), insbesondere 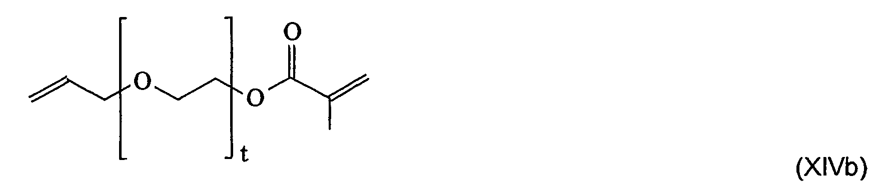 wobei s und t größer gleich null sind und die Summe s + t vorzugsweise im Bereich von 1 bis 20, insbesondere im Bereich von 2 bis 10 liegt.

Gemäß einem besonderen Aspekt enthält die Mischung vorzugsweise 0,5- 40 Gew.-%, insbesondere 5 bis 15 Gew.-% Verbindungen der Formel (XII) und/oder (XIII), bezogen auf das Gesamtgewicht der Monomermischung.

Im Rahmen einer besonders bevorzugten Ausführungsform der vorliegenden Erfindung enthält die erfindungsgemäße Mischung zusätzlich mindestens ein ethylenisch ungesättigtes Monomer (B). Diese Monomere (B) unterscheiden sich von den asymmetrischen Verbindungen der Formeln (XIII) und (XIV), den Monomeren (A) und den Thio(meth)acrylaten der Formeln (I) und/oder (II). Die Monomere (B) sind in der Fachwelt bekannt und vorzugsweise mit den Monomeren (A) und den Thio(meth)acrylaten der Formeln (I) und/oder (II) copolymerisierbar Zu diesen Monomeren (B) gehören insbesondere

Nitrile der (Meth)acrylsäure und andere stickstoffhaltige Methacrylate, wie Methacryloylamidoacetonitril, 2-Methacryloyloxyethylmethylcyanamid, Cyanomethylmethacrylat;
(Meth)acrylate, die sich von gesättigten Alkoholen ableiten, wie Methyl(meth)acrylat, Ethyl(meth)acrylat, n-Propyl(meth)acrylat, iso-Propyl(meth)acrylat, n-Butyl(meth)acrylat, sec-Butyl(meth)acrylat, tert.-Butyl(meth)acrylat, Pentyl(meth)acrylat, Hexyl(meth)acrylat, Heptyl(meth)acrylat, 2-Ethylhexyl(meth)acrylat, Octyl(meth)acrylat, Nonyl(meth)acrylat, iso-Octyl(meth)acrylat, iso-Nonyl(meth)acrylat, 2-tert.-Butylheptyl(meth)acrylat, 3-iso-Propylheptyl(meth)acrylat, Decyl(meth)acrylat, Undecyl(meth)acrylat, 5-Methylundecyl(meth)acrylat, Dodecyl(meth)acrylat, 2-Methyldodecyl(meth)acrylat, Tridecyl(meth)acrylat, 5-Methyltridecyl(meth)acrylat, Tetradecyl(meth)acrylat, Pentadecyl(meth)acrylat, Hexadecyl(meth)acrylat, 2-Methylhexadecyl(meth)acrylat, Heptadecyl(meth)acrylat, 5-iso-Propylheptadecyl(meth)acrylat, 4-tert.-Butyloctadecyl(meth)acrylat, 5-Ethyloctadecyl(meth)acrylat, 3-iso-Propyloctadecyl(meth)acrylat, Octadecyl(meth)acrylat, Nonadecyl(meth)acrylat, Eicosyl(meth)acrylat, Cetyleicosyl(meth)acrylat, Stearyleicosyl(meth)acrylat, Docosyl(meth)acrylat und/oder Eicosyltetratriacontyl(meth)acrylat;
Cycloalkyl(meth)acrylate, wie Cyclopentyl(meth)acrylat, Cyclohexyl(meth)acrylat, 3-Vinyl-2-butyl-cyclohexyl(meth)acrylat und Bornyl(meth)acrylat;
(Meth)acrylate, die sich von ungesättigten Alkoholen ableiten, wie 2-Propinyl(meth)acrylat, Allyl(meth)acrylat und Oleyl(meth)acrylat, Vinyl(meth)acrylat;
Aryl(meth)acrylate, wie Benzyl(meth)acrylat oder Phenyl(meth)acrylat, wobei die Arylreste jeweils unsubstituiert oder bis zu vierfach substituiert sein können;
Hydroxylalkyl(meth)acrylate, wie 3-Hydroxypropyl(meth)acrylat, 3,4-Dihydroxybutyl(meth)acrylat, 2-Hydroxyethyl(meth)acrylat, 2-Hydroxypropyl(meth)acrylat, 2,5-Dimethyl-1,6-hexandiol(meth)acrylat, 1,10-Decandiol(meth)acrylat, 1,2-Propandiol(meth)acrylat; Aminoalkyl(meth)acrylate, wie tris(2-Methacryloxyethyl)amin, N-Methylformamidoethyl(meth)acrylat, 2-Ureidoethyl(meth)acrylat;
carbonylhaltige (Meth)acrylate, wie 2-Carboxyethyl(meth)acrylat, Carboxymethyl(meth)acrylat, Oxazolidinylethyl(meth)acrylat, N-(Methacryloyloxy)formamid, Acetonyl(meth)acrylat, N-Methacryloylmorpholin, N-Methacryloyl-2-pyrrolidinon;
(Meth)acrylate von Etheralkoholen, wie Tetrahydrofurfuryl(meth)acrylat, Vinyloxyethoxyethyl(meth)acrylat, Methoxyethoxyethyl(meth)acrylat, 1-Butoxypropyl(meth)acrylat, 1-Methyl-(2-vinyloxy)ethyl(meth)acrylat, Cyclohexyloxymethyl(meth)acrylat, Methoxymethoxyethyl(meth)acrylat, Benzyloxymethyl(meth)acrylat, Furfuryl(meth)acrylat, 2-Butoxyethyl(meth)acrylat, 2-Ethoxyethoxymethyl(meth)acrylat, 2-Ethoxyethyl(meth)acrylat, Allyloxymethyl(meth)acrylat, 1-Ethoxybutyl(meth)acrylat, Methoxymethyl(meth)acrylat, 1-Ethoxyethyl(meth)acrylat, Ethoxymethyl(meth)acrylat;
(Meth)acrylate von halogenierten Alkoholen, wie 2,3-Dibromopropyl(meth)acrylat, 4-Bromophenyl(meth)acrylat, 1,3-Dichloro-2-propyl(meth)acrylat, 2-Bromoethyl(meth)acrylat, 2-Iodoethyl(meth)acrylat, Chloromethyl(meth)acrylat;
Oxiranyl(meth)acrylate, wie 2,3-Epoxybutyl(meth)acrylat, 3,4-Epoxybutyl(meth)acrylat, Glycidyl(meth)acrylat;
Amide der (Meth)acrylsäure, wie N-(3-Dimethylaminopropyl)(meth)acrylamid, N-(Diethylphosphono)(meth)acrylamid, 1-(Meth)acryloylamido-2-methyl-2-propanol, N-(3-Dibutylaminopropyl)(meth)acrylamid, N-t-Butyl-N-(diethylphosphono)(meth)acrylamid, N, N-bis(2-Diethylaminoethyl)(meth)acrylamid, 4-(Meth)acryloylamido-4-methyl-2-pentanol, N-(Methoxymethyl)(meth)acrylamid, N-(2-Hydroxyethyl)(meth)acrylamid, N-Acetyl(meth)acrylamid, N-(Dimethylaminoethyl)(meth)acrylamid, N-Methyl-N-phenyl(meth)acrylamid, N,N-Diethyl(meth)acrylamid, N-Methyl(meth)acrylamid, N,N-Dimethyl(meth)acrylamid, N-Isopropyl(meth)acrylamid;
heterocyclische (Meth)acrylate, wie 2-(1-Imidazolyl)ethyl(meth)acrylat, 2-(4-Morpholinyl)ethyl(meth)acrylat und 1-(2-Methacryloyloxyethyl)-2-pyrrolidon;
Phosphor-, Bor- und/oder Silicium-haltige (Meth)acrylate, wie 2-(Dimethylphosphato)propyl(meth)acrylat, 2-(Ethylenphosphito)propyl(meth)acrylat, Dimethylphosphinomethyl(meth)acrylat, Dimethylphosphonoethyl(meth)acrylat, Diethyl(meth)acryloylphosphonat, Dipropyl(meth)acryloylphosphat;
schwefelhaltige (Meth)acrylate, wie Ethylsulfinylethyl(meth)acrylat, 4-Thiocyanatobutyl(meth)acrylat, Ethylsulfonylethyl(meth)acrylat, Thiocyanatomethyl(meth)acrylat, Methylsulfinylmethyl(meth)acrylat, Bis((meth)acryloyloxyethyl)sulfid;
Bis(allylcarbonate), wie Ethylenglykol-bis(allylcarbonat), 1,4-Butandiol-bis(allylcarbonat), Diethylenglykol-bis(allylcarbonat);
Vinylhalogenide, wie beispielsweise Vinylchlorid, Vinylfluorid, Vinylidenchlorid und Vinylidenfluorid;
Vinylester, wie Vinylacetat.
Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole;
Vinyl- und Isoprenylether;
Maleinsäure und Maleinsäurederivate, wie beispielsweise Mono- und Diester der Maleinsäure, wobei die Alkoholreste 1 bis 9 Kohlenstoffatome aufweisen,
Maleinsäureanhydrid, Methylmaleinsäureanhydrid, Maleinimid, Methylmaleinimid;
Fumarsäure und Fumarsäurederivate, wie beispielsweise Mono- und Diester der Fumarsäure, wobei die Alkoholreste 1 bis 9 Kohlenstoffatome aufweisen.

Ergänzend kann auch ein unter Monomer (A) aufgeführtes Di(meth)acrylat als Monomer (B) verwendet werden.

In diesem Zusammenhang umfasst der Ausdruck (Meth)acrylate Methacrylate und Acrylate sowie Mischungen aus beiden. Dementsprechend umfasst der Ausdruck (Meth)acrylsäure Methacrylsäure und Acrylsäure sowie Mischungen aus beiden.

Die ethylenisch ungesättigten Monomere können einzeln oder als Mischungen eingesetzt werden.

Die Zusammensetzung der erfindungsgemäßen Monomermischungen ist prinzipiell beliebig. Sie kann dazu genutzt werden, das Eigenschaftsprofil des erfindungsgemäßen Kunststoffes an die Bedürfnisse der Anwendung anzupassen. Es hat sich jedoch als überaus zweckmäßig erwiesen, die Zusammensetzung der Monomermischung so zu wählen, dass sich das Prepolymer bestehend aus den Verbindung(en) der Formel (I), (II) und (III) und mindestens eine Monomer (A) sowie Styrol bei der gewünschten Polymerisationstemperatur homogen mischen, weil derartige Mischungen aufgrund ihrer i. a. niedrigen Viskosität leicht handhabbar sind und darüber hinaus zu homogenen Kunststoffen mit verbesserten Materialeigenschaften polymerisiert werden können.

Gemäß einer besonders bevorzugten Ausführungsform der vorliegenden Erfindung enthält die Monomermischung ein Prepolymer, bestehend aus mindestens 5,0 Gew.-%, vorzugsweise mindestens 20,0 Gew.-%, besonders bevorzugt mindestens 50,0 Gew.-%, Verbindungen der Formel (I), (II) und (III), jeweils bezogen auf das Gesamtgewicht der Monomermischung. Der Gewichtsanteil von Monomer (A) beträgt vorzugsweise mindestens 2,0 Gew.-%, vorzugsweise mindestens 10,0 Gew.-%, besonders bevorzugt mindestens 20,0 Gew.-%, jeweils bezogen auf das Gesamtgewicht der Monomermischung. Der Gewichtsanteil aromatischer Vinylverbindungen, insbesondere Styrol, beträgt vorzugsweise mindestens 2,0 Gew.-%, vorzugsweise mindestens 10,0 Gew.-%, besonders bevorzugt mindestens 20,0 Gew.-%, jeweils bezogen auf das Gesamtgewicht der Monomermischung.

Gemäß einem besonderen Aspekt der vorliegenden Erfindung weist die Mischung
50 bis 90 Gew.-%, insbesondere 60 bis 85 Gew.-% des Prepolymers der Monomere der Formeln (I) und/oder (II) sowie (III),
2 bis 50 Gew.-%, insbesondere 10 bis 30 Gew.-% Monomere (A) und
2 bis 50 Gew.-%, insbesondere 10 bis 30 Gew.-% aromatische Vinylverbindungen, insbesondere Styrol und
0 bis 45 Gew.-%, insbesondere 1 bis 10 Gew.-% Monomere der Formeln (XII) und (XIII) und/oder Monomere (B) auf, jeweils bezogen auf das Gesamtgewicht der Monomermischung.

Die Herstellung der erfindungsgemäß einzusetzenden Monomermischung ist dem Fachmann bekannt. Sie kann beispielsweise durch Mischen des Prepolymers, bestehend aus Thio(meth)acrylaten der Formeln (I) und/oder (II) mit (III), der aromatischen Vinylverbindungen sowie der Monomere (A) und (B) auf an sich bekannte Weise erfolgen.

Für die Zwecke der vorliegenden Erfindung ist die Monomermischung bei Normaldruck und Temperaturen im Bereich von 20,0°C bis 80,0°C vorzugsweise fließfähig. Der Begriff "fließfähig" ist dem Fachmann bekannt. Er kennzeichnet eine Flüssigkeit, die vorzugsweise in verschiedene Formen gegossen und unter Verwendung geeigneter Hilfsmittel gerührt und homogenisiert werden kann. Besondere, fließfähige Massen im Sinne der Erfindung weisen insbesondere bei 25°C und bei Normaldruck (101325 Pa) dynamische Viskositäten in der Größenordnung von 0,1 mPa.s bis 10 Pa.s, zweckmäßigerweise im Bereich von 0,65 mPa.s bis 1 Pa.s, auf. In einer ganz besonders bevorzugten Ausführungsform der vorliegenden Erfindung weist eine gegossene Monomermischung keine Blasen, insbesondere keine Luftblasen auf. Ebenfalls bevorzugt sind solche Monomermischungen, aus denen Blasen, insbesondere Luftblasen, durch geeignete Verfahren, wie beispielsweise Temperaturerhöhung und/oder Anlegen von Vakuum entfernt werden können.

Der erfindungsgemäße hochtransparente Kunststoff ist durch freie radikalische Copolymerisation der vorstehend beschriebenen niedrigviskosen (η< 200 mPa.s) Monomermischung erhältlich. Die freie radikalische Copolymerisation ist ein weithin bekanntes durch freie Radikale initiiertes Verfahren, bei welchem man eine Mischung niedermolekularer Monomere in hochmolekulare Verbindungen, sogenannte Polymere, überführt. Für weitere Einzelheiten wird auf die Offenbarung von H. G. Elias, Makromoleküle, Band 1 und 2, Basel, Heidelberg, New York Hüthig und Wepf. 1990 und Ullmann's Encyclopedia of Industrial Chemistry, 5. Aufl., Stichwort "Polymerization Processes" verwiesen.

In einer bevorzugten Ausführungsform der vorliegenden Erfindung ist der erfindungsgemäße Kunststoff durch Masse- oder Substanzpolymerisation der Monomermischung erhältlich. Dabei wird unter der Masse- oder Substanzpolymerisation ein Polymerisationsverfahren verstanden, bei dem Monomere ohne Lösungsmittel polymerisiert werden, so dass die Polymerisationsreaktion in Masse oder in Substanz vonstatten geht. Im Gegensatz dazu ist die Polymerisation in Emulsion (sogenannte Emulsionspolymerisation) und die Polymerisation in der Dispersion (sogenannte Suspensionspolymerisation) zu sehen, bei der die organischen Monomere mit Schutzkolloiden und/oder Stabilisatoren in wässriger Phase suspendiert werden und mehr oder weniger grobe Polymerisatteilchen gebildet werden. Eine besondere Form der Polymerisation in heterogener Phase ist die Perlpolymerisation, die im wesentlichen zur Suspensionspolymerisation zu rechnen ist.

Die Polymerisationsreaktion kann grundsätzlich auf jede dem Fachmann geläufige Weise ausgelöst werden, beispielsweise unter Verwendung eines Radikalinitiators (z. B. Peroxid, Azoverbindung) oder durch Bestrahlen mit UV-Strahlen, sichtbarem Licht, α- Strahlen, β-Strahlen oder γ-Strahlen, oder eine Kombination derselben eingeleitet werden.

In einer bevorzugten Ausführungsform der vorliegenden Erfindung werden zur Initiierung der Polymerisation lipophile radikalische Polymerisationsinitiatoren verwendet. Die radikalischen Polymerisationsinitiatoren sind insbesondere deswegen lipophil, damit sie sich in der Mischung der Substanzpolymerisation lösen. Zu einsetzbaren Verbindungen gehören neben den klassischen Azoinitiatoren, wie Azoisobuttersäurenitril (AIBN) bzw. 1,1-Azobiscyclohexancarbonitril, u. a. aliphatische Peroxyverbindungen, wie z. B. tert.-Amylperoxyneodecanoat, tert.-Amylperoxypivalat, tert.-Butylperoxypivalat, tert.-Amylperoxy-2-ethylhexanoat, tert.-Butylperoxy-2-ethylhexanoat, tert.-Amylperoxy-3,5,5,-trimethylhexanoat, Ethyl-3,3-di-(tert.-amylperoxy)-butyrate, tert.-Butylperbenzoat, tert.-Butylhydroperoxid, Decanoylperoxid, Laurylperoxid, Benzoylperoxid und beliebige Mischungen der genannten Verbindungen. Von den vorgenannten Verbindungen ist AIBN ganz besonders bevorzugt.

In einer weiteren bevorzugten Ausführungsform der vorliegenden Erfindung erfolgt die Einleitung der Polymerisation unter Verwendung bekannter Photoinitiatoren durch Bestrahlen mit UV-Strahlen oder dergleichen. Hier können die gängigen, kommerziell erhältlichen Verbindungen wie z. B. Benzophenon, α,α-Diethoxyacetophenon, 4,4-Diethylaminobenzophenon, 2,2-Dimethoxy-2-phenylacetophenon, 4-Isopropylphenyl-2-hydroxy-2-propylketon, 1-Hydroxycyclohexylphenylketon, Isoamyl-p-dimethylaminobenzoat, Methyl-4-dimethylaminobenzoat, Methyl-o-benzoylbenzoat, Benzoin, Benzoinethylether, Benzoinisopropylether, Benzoinisobutylether, 2-Hydroxy-2-methyl-1-phenylpropan-1-on, 2-Isopropylthioxanthon, Dibenzosuberon, 2,4,6-Trimethylbenzoyldiphenylphosphinoxid, Bisacylphosphinoxid und andere zum Einsatz kommen, wobei die genannten Photoinitiatoren allein oder in Kombination von zwei oder mehreren oder in Kombination mit einem der obigen Polymerisationsinitiatoren benutzt werden können.

Die Menge der Radikalbildner kann in weiten Bereichen variieren. Bevorzugt kommen beispielsweise Mengen im Bereich von 0,1 bis 5,0 Gew.-%, bezogen auf das Gewicht der Gesamtzusammensetzung zum Einsatz. Besonders bevorzugt werden Mengen im Bereich von 0,1 bis 2,0 Gew.-%, insbesondere Mengen im Bereich von 0,1 bis 0,5 Gew.-%, jeweils bezogen auf das Gewicht der Gesamtzusammensetzung, verwendet.

Die für die Polymerisation zu wählende Polymerisationstemperatur ist dem Fachmann offensichtlich. Sie wird in erster Linie durch den gewählten Initiator und die Art und Weise der Initiierung (thermisch, durch Bestrahlung u. a.) bestimmt. Es ist bekannt, dass die Polymerisationstemperatur die Produkteigenschaften eines Polymeren beeinflussen kann. Daher werden im Rahmen der vorliegenden Erfindung Polymerisationstemperaturen im Bereich von 20,0°C bis 100,0°C, zweckmäßigerweise im Bereich von 20,0°C bis 80,0°C, insbesondere im Bereich von 20,0°C bis 60,0°C bevorzugt. In einer besonders bevorzugten Ausführungsform der vorliegenden Erfindung wird die Reaktionstemperatur während der Reaktion, vorzugsweise stufenweise erhöht. Weiterhin hat sich auch ein Tempern bei erhöhter Temperatur, beispielsweise bei 100°C bis 150°C, gegen Ende der Reaktion als zweckmäßig erwiesen.

Die Reaktion kann sowohl bei Unterdruck als auch bei Überdruck stattfinden. Vorzugsweise wird sie aber bei Normaldruck durchgeführt. Die Reaktion kann unter Luft als auch unter Schutzgasatmosphäre stattfinden, wobei vorzugsweise ein möglichst geringer Sauerstoffanteil vorhanden ist, da dieser eine mögliche Polymerisation inhibiert.

In einer besonders bevorzugten Ausführungsform der vorliegenden Erfindung geht man zur Herstellung des erfindungsgemäßen hochtransparenten Kunststoffs so vor, dass man eine homogene Mischung aus den Komponenten Monomermischung, Initiator und weiteren Additiven, wie z. B. Gleitmittel herstellt und diese daraufhin zwischen Glasplatten füllt, deren Form durch die spätere Anwendung, z. B. als Linsen, Brillengläser, Prismen oder sonstige, optische Komponenten, vorbestimmt ist. Die Initiierung der Substanzpolymerisation erfolgt durch Energiezufuhr, beispielsweise durch energiereiche Strahlung, insbesondere mit UV-Licht, oder durch Erwärmen, zweckmäßigerweise im Wasserbad und über mehrere Stunden. Man erhält auf diese Weise das optische Material in seiner gewünschten Form als klaren, transparenten, farblosen, harten Kunststoff.

Im Rahmen der vorliegenden Erfindung bezeichnen Gleitmittel Zusatzstoffe für gefüllte plastische Massen, wie Pressmassen und Spritzgussmassen, um die Füllstoffe leichter gleitend und die Pressmassen damit leichter verformbar zu machen. Hierzu sind beispielsweise Metallseifen und Siloxan-Kombinationen geeignet. Infolge seiner Unlöslichkeit in Kunststoffen wandert ein Teil des Gleitmittels bei der Verarbeitung an die Oberfläche und wirkt als Trennmittel. Besonders geeignete Gleitmittel, wie nicht-ionische fluoroberflächenaktive Mittel, nicht-ionische siliconoberflächenaktive Mittel, quaternäre Alkylammoniumsalze und saure Phosphatester, werden in der EP 271839 A beschrieben, auf deren Offenbarung im Rahmen der vorliegenden Erfindung explizit Bezug genommen wird.

Erfindungsgemäß wird ein hochtransparenter Kunststoff mit sehr guten optischen und mechanischen Eigenschaften zur Verfügung gestellt. So besitzt er gemäß DIN 5036 vorzugsweise eine Transmission größer 88,0 %, zweckmäßig größer 89,0 %.

Brechungsindex n_{D} des erfindungsgemäßen Kunststoffes ist vorzugsweise größer oder gleich 1,59. Der Brechungsindex eines Mediums ist im Allgemeinen von der Wellenlänge der einfallenden Strahlung und von der Temperatur abhängig. Die erfindungsgemäßen Angaben des Brechungsindex beziehen sich daher auf die in DIN 53491 spezifizierten Standardangaben (Standardwellenlänge der (gelben) D-Linie des Natriums (ca. 589 nm)).

Erfindungsgemäß weist der Kunststoff vorzugsweise eine Abbesche Zahl > 36,0, gemäß DIN 53491 auf. Informationen zur Abbeschen-Zahl kann der Fachmann der Literatur, beispielsweise dem Lexikon der Physik (Walter Greulich (Hrsg.); Lexikon der Physik; Heidelberg; Spektrum, Akademischer Verlag; Band 1; 1998) entnehmen.

Gemäß einer besonders bevorzugten Ausführungsform der vorliegenden Erfindung weist der Kunststoff eine Abbesche Zahl > 36,0, zweckmäßigerweise > 37,0, insbesondere > 38,0 auf.

Die mechanischen Eigenschaften werden durch den FDA-Kugelfalltest (ANSI Z 80.1) geprüft. Bestanden ist der Test, wenn der Probekörper die Belastung durch eine Kugel mit 16 mm Durchmesser unbeschadet übersteht. Die Materialeigenschaften sind umso besser, je größer der Durchmesser der Kugel ist, mit der die Probe belastet wird und unbeschadet bleibt.

Weiterhin zeichnet sich der erfindungsgemäße Kunststoff günstigerweise durch eine hohe Glasübergangstemperatur aus, so dass er auch bei Temperaturen oberhalb Raumtemperatur seine hervorragenden mechanischen Eigenschaften, insbesondere seine Schlagzähigkeit und seine Härte behält. Vorzugsweise ist die Glasübergangstemperatur des erfindungsgemäßen Kunststoffes größer 80°C, zweckmäßigerweise größer 90°C, insbesondere größer 95°C.

Mögliche Einsatzgebiete für den erfindungsgemäßen hochtransparenten Kunststoff sind dem Fachmann offensichtlich. Er eignet sich insbesondere für alle Anwendungen, die für transparente Kunststoffe vorgezeichnet sind. Aufgrund seiner charakteristischen Eigenschaften ist er vor allem für optische Linsen, insbesondere für ophthalmische Linsen geeignet.

Ein weiterer Gegenstand der Erfindung ist eine Mischung enthaltend (a) eine Mischung gemäß Anspruch 1 und (b) mindestens einen photochromen Farbstoff. Hierbei können alle dem Fachmann bekannten photochromen Farbstoffe und deren Mischungen verwendet werden. Bevorzugt werden photochrome Farbstoffe wie z.B. Spiro(indoline)naphthoxazine, Spiro(indoline) benzoxazine, Spiropyrane, Acetaniliden, Aldehydhydrazonen, Thioindigo, Stilben-, Rhodamin- und Anthrachinon-Derivate, Benzofuroxane, Benzopyrane, Naphthopyrane, Organometalldithiozonate, Fulgide und Fulgimide verwendet.

Aus diesen Mischungen können photochrome Materialien hergestellt werden, die z.B. als Linsen, bevorzugt optische Linsen, Glasscheiben oder Glaseinsätze verwendet werden.

Die nachfolgenden Beispiele und das Vergleichsbeispiel dienen zur Erläuterung der Erfindung, ohne dass hierdurch eine Beschränkung erfolgen soll.

### Beispiele

### Synthese der Thiomethacrylat-Mischung

75,36 g 1,2-Ethandithiol werden in einen Erlenmeyerkolben mit Schutzgas-Einleitung eingewogen und gerührt und 416,43 g 13%ige NaOH-Lösung werden innerhalb von 30 Minuten bei 25-30°C unter Wasserkühlung zudosiert. Es bildet sich eine bräunliche, klare Lösung.

178,64 g Methacrylsäureanhydrid und die Na-Thiolat-Lösung werden nun parallel bei der gewünschten Dosiertemperatur innerhalb von 45 Minuten zu dem vorgelegten und gerührten Essigester/Wasser im Reaktionskolben dosiert. Dabei wird gegebenenfalls Schutzgas über den Ansatz geleitet. Im allgemeinen kühlt der Kolbeninhalt bei Zulaufbeginn um ca. 2°C ab, nach ca. 5-10 Minuten beginnt eine leicht exotherme Reaktion, d. h. nun kühlt man entsprechend, um die gewünschte Reaktionstemperatur (35°C) einzuhalten. Nach Zulaufende rührt man den Ansatz noch 5 Minuten bei 35°C und kühlt ihn dann unter Rühren auf ca. 25°C ab.

Der Ansatz wird in einen Scheidetrichter überführt, aufgetrennt und die untere, wässrige Phase abgelassen. Zur Aufarbeitung wird die organische Phase in einen Erlenmeyerkolben überführt und mit ®Dowex M-31 ca. 15 Minuten gerührt, anschließend filtriert man den Ionentauscher ab.

Die etwas trübe bis fast klare Rohesterlösung wird nun mit 100 ppm HQME stabilisiert und am Rotationsverdampfer bei max. 50°C eingeengt. Das farblose Endprodukt wird bei Raumtemperatur (20-25°C) filtriert. Man erhält ca. 140 g farblos, klaren Ester.

Herstellung Prepolymer: Reaktion von 6,84 g des Thiodi(meth)acrylats und 0,36 g DMDO in Gegenwart eines Amins als Katalysator analog EP 284374.

Zur Herstellung eines Polymerisats auf der Basis eines oligomeren Thiodimethacrylats mischt man zum Beispiel 7,2 g des Prepolymers, 2,4 g Styrol, 2,4 g 10-fach ethoxyliertes Bisphenol-A-Di(meth)acrylat, 0,1 g Hydroxyethylmethacrylat 36 mg eines UV-Initiators wie z. B. Irgacur 819 und 24 mg tert.-Butylperoctoat o. ä. Initiatoren (vgl. Beispiel 1). Die homogene Gießharzmischung wird in eine entsprechende Form gegeben und innerhalb 10 min. in einer UV-Härtungsanlage mit 1200 W Quecksilberhochdruckstrahler ausgehärtet. Anschließend tempert man noch ca. 2 h bei ca. 120°C im Wärmeschrank.

| Versuch | System | Brechungs/Abb-Zahl DIN 53491 | | Geruch | Transmission | Kugelfalltest FDA Durchmesser ANSI Z80.1 | Durchschnitt kugeldurchmesser in mm Test bestanden |
|---|---|---|---|---|---|---|---|
| | | 589 nm | | | | | |
| Beispiele | | | | | | | |
| B1 | PLEX 6931/DMDO-Prepdymer co Styrol co E10BADMA =60:20:20 Plus 1% HEMA | 1,5939 | 38,2 | nein | 89 | bestanden | 18 |
| Vergleichsbeispiele | | | | | | | |
| VB I VB I | PLEX 6931 co DMDO co Styrol co E10BADMA = 57:3:20:20 plus 1% HEMA (#) | - | - | ja | - | - | - |
| VB II | PLEX 6931 Styrol co E10BADMA = 60:20:20 plus 1% HEMA | 1,5959 | 34,9 | nein | 89 | bestanden | 16 |
| VB III | PLEX 6931/DMDO-Prepolymer co Styrol = 70:30 plus 1% HEMA | 1,6089 | 29,6 | nein | 89 | bestanden | 16 |

| | | | | | | | |
|---|---|---|---|---|---|---|---|
| Plex 6931 O: Reaktionsprodukt aus Methacrylsäureanhydrid und Ethandithiol aus DE 316671 E10BADMA: ethoxiliertes BisphenolAdimethacrylat mit Ethoxylierungsgrad von ca. 10 DMDO: Dimercaptodioxaoctan HEMA: Hydroxyethylmethacrylat (#): Aufgrund der Geruchsproblematik wurden keine weiteren analytischen Untersuchungen vorgenommen. | | | | | | | |

Das erfindungsgemäße Gemisch (B 1) ist geruchlos. Das Vergleichsbeispiel VB I bestand diesen Test nicht, weshalb es nicht weiter untersucht wurde.

Bei vergleichbarem Brechungsindex (von B 1 mit VB II und VB III) war jedoch die Abbesche-Zahl bei der erfingungsgemäßen Mischung besser. Zudem schnitt die erfindungsgemäße Mischung beim Kugelfalltest wesentlich besser ab.

## Patentansprüche

1. Mischung zur Herstellung transparenter Kunststoffe, umfassend
a) ein Prepolymer, hergestellt aus Verbindungen der Formel (I) und (II) 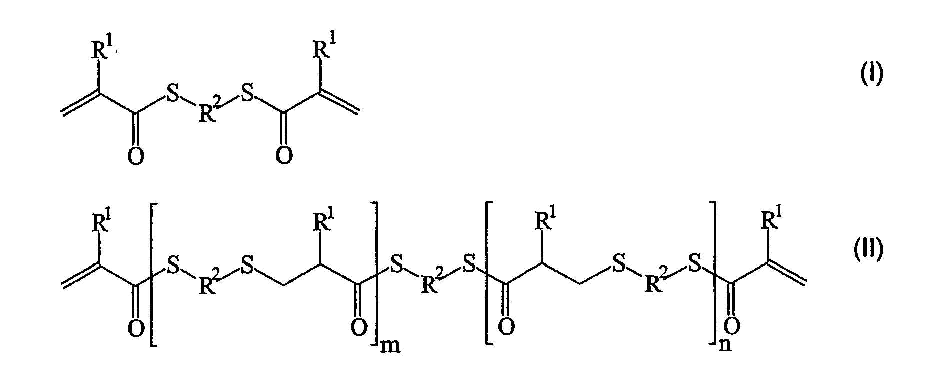 worin R¹ jeweils unabhängig voneinander Wasserstoff oder einen Methylrest,
R² jeweils unabhängig voneinander einen linearen oder verzweigten, aliphatischen oder cycloaliphatischen Rest oder einen substituierten oder unsubstituierten aromatischen oder heteroaromatischen Rest und m und
n jeweils unabhängig voneinander eine ganze Zahl größer gleich 0 mit m + n > 0 bedeuten, und Alkyldithiolen oder Polythiolen, vorzugsweise Verbindungen der Formel (III),
HS-R³-SH (III)
wobei R³ gleich oder verschieden von R² die in R² angegebene Bedeutung haben kann, und
b) mindestens ein radikalisch polymerisierbares Monomer (A) mit mindestens 2 Methacrylatgruppen und
c) aromatischen Vinylverbindungen,
d) gegebenenfalls ein radikalisch polymerisierbares Monomer mit mindestens zwei endständigen olefinischen Gruppen, die sich in ihrer Reaktivität unterscheiden, und/oder
e) gegebenenfalls mindestens ein ethylenisch ungesättigtes Monomer (B).

2. Mischung gemäß Anspruch 1, **dadurch gekennzeichnet, dass** sie mehr als 10 mol-%, bezogen auf die Gesamtmenge der Verbindungen der Formel (I), (II) und (III), Verbindungen der Formel (II) mit m+n = 2 enthält.

3. Mischung gemäß einem der vorhergehenden Ansprüche, **dadurch gekennzeichnet, dass** der Rest R² der Formeln (I) und/oder (II) ein aliphatischer Rest mit 1 bis 10 Kohlenstoffatomen ist.

4. Mischung gemäß einem der vorhergehenden Ansprüche, **dadurch gekennzeichnet, dass** die Mischung mehr als 5,8 mol-%, bezogen auf die Gesamtmenge der Verbindungen der Formel (I), (II) und (III), Verbindungen der Formel (II) mit m+n = 3 enthält.

5. Mischung gemäß einem der vorhergehenden Ansprüche, **dadurch gekennzeichnet, dass** die Mischung 1 bis 50 mol-%, bezogen auf die Gesamtmenge der Verbindungen der Formel (I), (II) und (III), Verbindungen der Formel (I) enthält.

6. Mischung gemäß einem der vorhergehenden Ansprüche, **dadurch gekennzeichnet, dass** die Mischung 1 bis 40 mol-%, bezogen auf die Gesamtmenge der Verbindungen der Formel (I), (II) und (III), Verbindungen der Formel (II) mit m+n = 1 enthält.

7. Mischung gemäß einem der vorangehenden Ansprüche, **dadurch gekennzeichnet, dass** die Mischung Verbindungen der Formel (II) mit m+n > 3 enthält.

8. Mischung gemäß einem der vorhergehenden Ansprüche, **dadurch gekennzeichnet, dass** der Gesamtanteil an Verbindungen der Formel (I), (II) und (III) mindestens 5,0 Gew.-%, bezogen auf das Gesamtgewicht der Mischung, beträgt.

9. Mischung gemäß einem der vorhergehenden Ansprüche, **dadurch gekennzeichnet dass** die Mischung mindestens ein Monomer (A) enthält, das mit den Prepolymeren, hergestellt aus den Monomeren der Formeln (I), (II) und (III) copolymerisierbar ist.

10. Mischung gemäß Anspruch 9, **dadurch gekennzeichnet, dass** die Mischung Di(meth)acrylate umfasst.

11. Mischung gemäß der vorhergehenden Ansprüche, **dadurch gekennzeichnet, dass** die Mischung als aromatische Vinylverbindungen vorzugsweise Styrol umfasst.

12. Mischungen gemäß Anspruch 1, **dadurch gekennzeichnet, dass** ein radikalisch polymerisierbares Monomer mit mindestens zwei endständigen olefinischen Gruppen, die sich in ihrer Reaktivität unterscheiden, der allgemeinen Formel 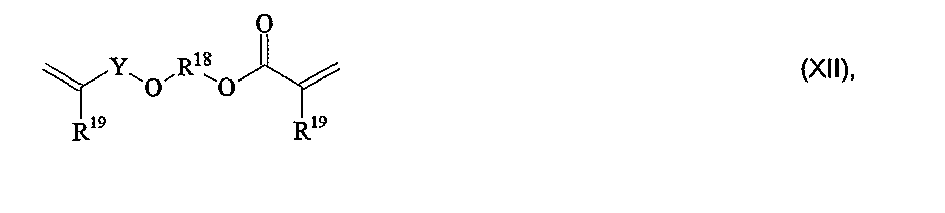 worin
der Rest R¹⁹ unabhängig ein Wasserstoffatom, ein Fluoratom und/oder eine Methylgruppe,
der Rest R¹⁸ eine verbindende Gruppe, die vorzugsweise 1 bis 1000, insbesondere 2 bis 100 Kohlenstoffatome umfasst,
der Rest Y eine Bindung oder eine verbindende Gruppe mit 0 bis 1000 Kohlenstoffatomen, insbesondere 1 bis 1000 Kohlenstoffatomen und vorzugsweise 1 bis 100 Kohlenstoffatomen bedeutet,
enthalten ist.

13. Mischungen gemäß Anspruch 12, **dadurch gekennzeichnet, dass** Allylpolyethylenglycolmethacrylat enthalten ist.

14. Mischungen gemäß Anspruch 1, **dadurch gekennzeichnet, dass** mindestens ein ethylenisch ungesättigtes Monomer (B), vorzugsweise Methacrylat, enthalten ist.

15. Mischungen gemäß Anspruch 14, **dadurch gekennzeichnet, dass** 2-Hydroxyethylmethacrylat enthalten ist.

16. Verfahren zur Herstellung transparenter Kunststoffe, **dadurch gekennzeichnet, dass** man eine Mischung gemäß einem der vorhergehenden Ansprüche polymerisiert.

17. Transparenter Kunststoff erhältlich durch ein Verfahren gemäß Anspruch 16.

18. Kunststoff gemäß Anspruch 17, **dadurch gekennzeichnet, dass** der Brechungsindex des Kunststoffs gemäß DIN 53491 größer als 1,59 ist.

19. Kunststoff gemäß einem der Ansprüchen 17 oder 18, **dadurch gekennzeichnet**, die Abbesche Zahl des Kunststoffs gemäß DIN 53491 größer als 36 ist.

20. Kunststoff gemäß einem der Ansprüche 17 bis 19, **dadurch gekennzeichnet, dass** der Mittelwert der Durchmesser der Kugel, die den Probekörper beim Kugelfalltest nicht beschädigt, ≥18 ist.

21. Kunststoff gemäß einem der Ansprüche 17 bis 20, **dadurch gekennzeichnet, dass** die Transmission des Kunststoffs gemäß DIN 5036 ≥89 % ist.

22. Kunststoff gemäß einem der Ansprüche 17 bis 21, **dadurch gekennzeichnet, dass** seine Glasübergangstemperatur größer als 80,0 °C ist.

23. Mischung enthaltend
(a) eine Mischung gemäß Anspruch 1 und
(b) mindestens einen photochromen Farbstoff.

24. Photochromes Material enthaltend eine Mischung gemäß Anspruch 23.

25. Verwendung des photochromen Materials gemäß Anspruch 24 als Linse oder Glasscheiben oder-einsätze.

26. Verwendung des hochtransparenten Kunststoffs gemäß einem der Ansprüchen 17 bis 22 als optische Linse.

27. Optische, insbesondere ophthalmische Linse aufweisend einen transparenten Kunststoff gemäß mindestens einem der Ansprüche 17 bis 22.

## Claims

1. Mixture for the production of transparent plastics, comprising
a) a prepolymer, produced from compounds of the formula (I) and (II) 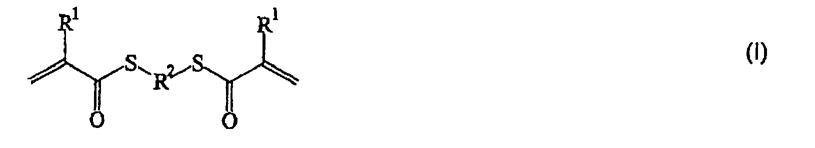 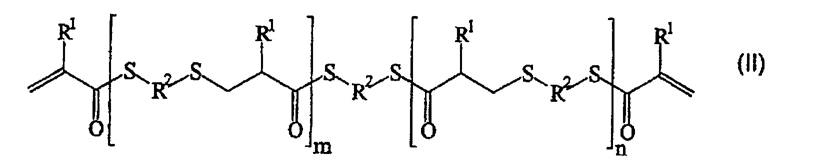 wherein R¹ each independently of one another mean hydrogen or a methyl radical,
R² each independently of one another mean a linear or branched, aliphatic or cycloaliphatic radical or a substituted or unsubstituted aromatic or heteroaromatic radical and m and n each independently of one another mean a whole number greater than 0 with m + n > 0, and alkylthiols or polythiols, preferably compounds of the formula (III),
HS-R³-SH (III)
wherein R³ can similarly or differently from R² have the meaning stated in R², and
b) at least one free-radically polymerizable monomer (A) with at least two methyl acrylate groups and
c) aromatic vinyl compounds,
d) optionally a free-radically polymerizable monomer with at least two terminal olefinic groups which differ in reactivity, and/or
e) optionally at least one ethylenically unsaturated monomer (B).

2. Mixture according to Claim 1, **characterized in that** it contains more than 10 mol.% of compounds of the formula (II) with m + n = 2, based on the total quantity of the compounds of the formula (I), (II) and (III) .

3. Mixture according to one of the foregoing claims, **characterized in that** the radical R² of the formulae (I) and/or (II) is an aliphatic radical with 1 to 10 carbon atoms.

4. Mixture according to one of the foregoing claims, **characterized in that** the mixture contains more than 5.8 mol.% of compounds of the formula (II) with m + n = 3, based on the total quantity of the compounds of the formula (I), (II) and (III).

5. Mixture according to one of the foregoing claims, **characterized in that** the mixture contains 1 to 50 mol.% of compounds of the formula (I), based on the total quantity of the compounds of the formula (I), (II) and (III).

6. Mixture according to one of the foregoing claims, **characterized in that** the mixture contains 1 to 40 mol.% of compounds of the formula (II) with m + n = 1, based on the total quantity of the compounds of the formula (I), (II) and (III).

7. Mixture according to one of the foregoing claims, **characterized in that** the mixture contains compounds of the formula (II) with m + n > 3.

8. Mixture according to one of the foregoing claims, **characterized in that** the total content of compounds of the formula (I), (II) and (III) is at least 5.0 wt.%, based on the total weight of the mixture.

9. Mixture according to one of the foregoing claims, **characterized in that** the mixture contains at least one monomer (A) which is copolymerizable with the prepolymers prepared from the monomers of the formulae (I), (II) and (III).

10. Mixture according to Claim 9, **characterized in that** the mixture contains di(meth)acrylates.

11. Mixture according to the foregoing claims, **characterized in that** the mixture preferably contains styrene as aromatic vinyl compounds.

12. Mixtures according to Claim 1, **characterized in that** they contain a free-radically polymerizable monomer with at least two terminal olefinic groups which differ in reactivity, of the general formula 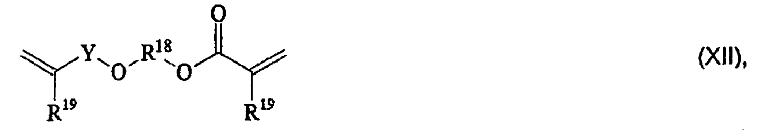 wherein
the radical R¹⁹ independently means a hydrogen atom, a fluorine atom and/or a methyl group,
the radical R¹⁸ means a linking group which preferably contains 1 to 1000, in particular 2 to 100 carbon atoms, and the radical Y means a linkage or a linking group with 0 to 1000 carbon atoms, in particular 1 to 1000 carbon atoms and preferably 1 to 100 carbon atoms.

13. Mixtures according to Claim 12, **characterized in that** they contain allylpolyethylene glycol methacrylate.

14. Mixtures according to Claim 1, **characterized in that** they contain at least one ethylenically unsaturated monomer (B), preferably methacrylate.

15. Mixtures according to Claim 14, **characterized in that** they contain 2-hydroxyethyl methacrylate.

16. Process for the production of transparent plastics, **characterized in that** a mixture according to one of the foregoing claims is polymerized.

17. Transparent plastic obtainable by a process according to Claim 16.

18. Plastic according to Claim 17, **characterized in that** the refractive index of the plastic according to DIN 53491 is greater than 1.59.

19. Plastic according to Claims 17 or 18, **characterized in that** the Abbé number of the plastic according to DIN 53491 is greater than 36.

20. Plastic according to one of Claims 17 to 19, **characterized in that** the mean value of the diameter of the ball which does not damage the test specimen in the falling ball test is ≥ 18.

21. Plastic according to one of Claims 17 to 20, **characterized in that** the transmission of the plastic according to DIN 5036 is ≥ 89%.

22. Plastic according to one of Claims 17 to 21, **characterized in that** its glass transition temperature is greater than 80.0°C.

23. Mixture containing
(a) a mixture according to Claim 1 and
(b) at least one photochromic dye.

24. Photochromic material containing a mixture according to Claim 23.

25. Use of the photochromic material according to Claim 24 as a lens or glass panes or glass inserts.

26. Use of the highly transparent plastic according to one of Claims 17 to 22 as an optical lens.

27. Optical, in particular ophthalmic lens containing a transparent plastic according to at least one of Claims 17 to 22.

## Revendications

1. Mélange pour la préparation de matériaux synthétiques transparents, comprenant
a) un prépolymère, préparé à partir de composés de formule (I) et (II) 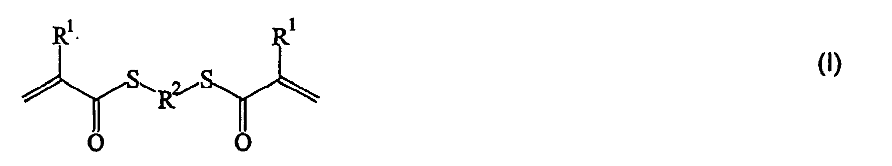 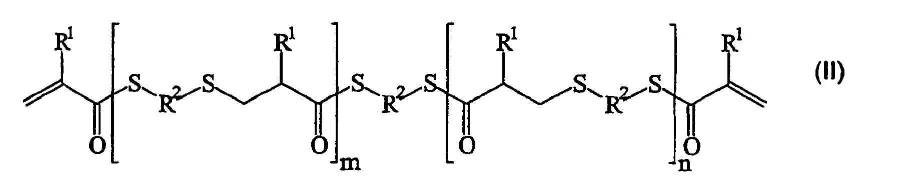 où
R¹ signifie, à chaque fois indépendamment l'un de l'autre, hydrogène ou un radical méthyle,
R² signifie, à chaque fois indépendamment l'un de l'autre, un radical linéaire ou ramifié, aliphatique ou cycloaliphatique ou un radical aromatique ou hétéroaromatique substitué ou non substitué et m et n signifient, à chaque fois indépendamment l'un de l'autre, un nombre entier supérieur à 0 avec m + n > 0, et des alkyldithiols ou des polythiols, de préférence des composés de formule (III),
HS-R³-SH (III)
où R³, identique ou différent de R² peut présenter la signification indiquée dans R², et
b) au moins un monomère polymérisable par voie radicalaire (A) avec au moins 2 groupes méthacrylate et
c) des composés aromatiques de vinyle,
d) le cas échéant un monomère polymérisable par voie radicalaire comprenant au moins deux groupes oléfiniques en position terminale qui se distinguent par leur réactivité, et/ou
e) le cas échéant au moins un monomère éthyléniquement insaturé (B).

2. Mélange selon la revendication 1, **caractérisé en ce qu'**il contient plus de 10% en mole, par rapport à la quantité totale des composés de formule (I), (II) et (III), de composés de formule (II) avec m + n = 2.

3. Mélange selon l'une quelconque des revendications précédentes, **caractérisé en ce que** le radical R² des formules (I) et/ou (II) est un radical aliphatique comprenant 1 à 10 atomes de carbone.

4. Mélange selon l'une quelconque des revendications précédentes, **caractérisé en ce que** le mélange contient plus de 5,8% en mole, par rapport à la quantité totale des composés de formule (I), (II) et (III), de composés de formule (II) avec m + n = 3.

5. Mélange selon l'une quelconque des revendications précédentes, **caractérisé en ce que** le mélange contient 1 à 50% en mole, par rapport à la quantité totale des composés de formule (I), (II) et (III), de composés de formule (I).

6. Mélange selon l'une quelconque des revendications précédentes, **caractérisé en ce que** le mélange contient 1 à 40% en mole, par rapport à la quantité totale des composés de formule (I), (II) et (III), de composés de formule (II) avec m + n = 1.

7. Mélange selon l'une des revendications précédentes, **caractérisé en ce que** le mélange contient des composés de formule (II) avec m + n > 3.

8. Mélange selon l'une quelconque des revendications précédentes, **caractérisé en ce que** la proportion totale de composés de formule (I), (II) et (III) est d'au moins 5,0% en poids, par rapport au poids total du mélange.

9. Mélange selon l'une quelconque des revendications précédentes, **caractérisé en ce que** le mélange contient au moins un monomère (A), qui est copolymérisable avec les prépolymères préparés à partir des monomères des formules (I), (II) et (III).

10. Mélange selon la revendication 9, **caractérisé en ce que** le mélange comprend des di(méth)acrylates.

11. Mélange selon les revendications précédentes, **caractérisé en ce que** le mélange comprend, comme composés aromatiques de vinyle, de préférence du styrène.

12. Mélanges selon la revendication 1, **caractérisés en ce qu'**ils contiennent un monomère polymérisable par voie radicalaire comprenant au moins deux groupes oléfiniques en position terminale qui se distinguent par leur réactivité, de formule générale 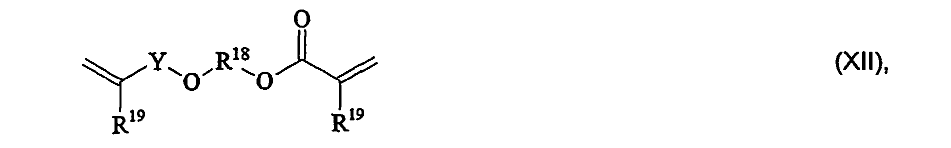 où
le radical R¹⁹ signifie, indépendamment, un atome d'hydrogène, un atome de fluor et/ou un groupe méthyle,
le radical R¹⁸ signifie un groupe liant, qui comprend de préférence 1 à 1000, en particulier 2 à 100 atomes de carbone,
le radical Y signifie une liaison ou un groupe liant comprenant 0 à 1000 atomes de carbone, en particulier 1 à 1000 atomes de carbone et de préférence 1 à 100 atomes de carbone.

13. Mélanges selon la revendication 12, **caractérisés en ce qu'**ils contiennent du méthacrylate d'allylpolyéthylèneglycol.

14. Mélanges selon la revendication 1, **caractérisés en ce qu'**ils contiennent au moins un monomère éthyléniquement insaturé (B), de préférence du méthacrylate.

15. Mélanges selon la revendication 14, **caractérisés en ce qu'**ils contiennent du méthacrylate de 2-hydroxyéthyle.

16. Procédé pour la préparation de matériaux synthétiques transparents, **caractérisé en ce qu'**on polymérise un mélange selon l'une quelconque des revendications précédentes.

17. Matériau synthétique transparent pouvant être obtenu par un procédé selon la revendication 16.

18. Matériau synthétique selon la revendication 17, **caractérisé en ce que** l'indice de réfraction du matériau synthétique selon la norme DIN 53491 est supérieur à 1,59.

19. Matériau synthétique selon l'une quelconque des revendications 17 ou 18, **caractérisé en ce que** l'indice d'Abbe du matériau synthétique selon la norme DIN 53491 est supérieur à 36.

20. Matériau synthétique selon l'une quelconque des revendications 17 à 19, **caractérisé en ce que** la valeur moyenne du diamètre de la bille qui ne dégrade pas l'éprouvette lors du test de chute d'une bille est ≥ 18.

21. Matériau synthétique selon l'une quelconque des revendications 17 à 20, **caractérisé en ce que** la transmission du matériau synthétique selon la norme DIN 5036 est ≥ 89%.

22. Matériau synthétique selon l'une quelconque des revendications 17 à 21, **caractérisé en ce que** sa température de transition vitreuse est supérieure à 80,0°C.

23. Mélange contenant
(a) un mélange selon la revendication 1 et
(b) au moins un colorant photochrome.

24. Matériau photochrome contenant un mélange selon la revendication 23.

25. Utilisation du matériau photochrome selon la revendication 24 comme lentille ou vitre ou pièce en verre.

26. Utilisation du matériau synthétique hautement transparent selon l'une quelconque des revendications 17 à 22 comme lentille optique.

27. Lentille optique, en particulier ophtalmologique présentant un matériau synthétique transparent selon au moins l'une quelconque des revendications 17 à 22.
